(19) Europäisches Patentamt
European Patent Office
Office européen des brevets

(11) EP 4 522 666 B1

(12) **EUROPEAN PATENT SPECIFICATION**

(45) Date of publication and mention of the grant of the patent:
**01.07.2026 Bulletin 2026/27**

(21) Application number: **23726094.8**

(22) Date of filing: **11.05.2023**

(51) International Patent Classification (IPC):
***C08F 10/06*** *(2006.01)* ***C08L 23/12*** *(2006.01)*
***C08F 210/06*** *(2006.01)*

(52) Cooperative Patent Classification (CPC):
(C-Sets available)
**C08F 210/06; C08F 10/06; C08L 23/12;**
C08L 2207/02 (Cont.)

(86) International application number:
**PCT/EP2023/062569**

(87) International publication number:
**WO 2023/217944 (16.11.2023 Gazette 2023/46)**

(54) **HETEROPHASIC POLYPROPYLENE COMPOSITION WITH LOW SHRINKAGE**
HETEROPHASISCHE POLYPROPYLENZUSAMMENSETZUNG MIT GERINGER SCHRUMPFUNG
COMPOSITION DE POLYPROPYLÈNE HÉTÉROPHASIQUE À FAIBLE RÉTRACTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.05.2022 EP 22173269**

(43) Date of publication of application:
**19.03.2025 Bulletin 2025/12**

(73) Proprietor: **SABIC Global Technologies B.V.**
**4612 PX Bergen op Zoom (NL)**

(72) Inventors:
- **GREIN, Christelle Marie Hélène**
**6160 GA Geleen (NL)**
- **STEENBAKKERS-MENTING, Henrica Norberta Alberta Maria**
**6160 GA Geleen (NL)**
- **SEEGERS, Désirée Marie Louise**
**6160 GA Geleen (NL)**
- **VAN MIERLOO, Sarah**
**6160 GA Geleen (NL)**
- **CANCELAS, Aaron**
**6160 GA Geleen (NL)**
- **ZUIDEVELD, Martin Alexander**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**EP-A1- 3 115 379**
**WO-A1-2012/049204**
**WO-A1-2021/063930**
**CN-A- 103 403 088**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 10/06, C08F 4/6465;**
**C08F 10/06, C08F 4/651;**
**C08F 10/06, C08F 4/6565;**
**C08F 110/06, C08F 2500/12, C08F 2500/18, C08F 2500/35;**
**C08F 210/06, C08F 2/001;**
**C08L 23/12, C08L 23/16;**
C08F 210/06, C08F 210/16, C08F 2500/27, C08F 2500/12, C08F 2500/35, C08F 2500/06, C08F 2500/04, C08F 2500/15;
C08F 210/06, C08F 210/16, C08F 2500/27, C08F 2500/12, C08F 2500/35, C08F 2500/06, C08F 2500/15

## Description

### TECHNICAL FIELD

The present invention relates to a heterophasic polypropylene composition with a low shrinkage in combination with a good impact strength/stiffness balance.

Further, the present invention is also directed to an article comprising the inventive polypropylene composition, preferably to an article wherein the article is prepared by injection molding and/or wherein the article is a household article, a packaging article, a healthcare article or an automotive interior article.

### BACKGROUND

Polymers, like polypropylene, are increasingly used in different demanding applications. At the same time, there is a continuous search for tailored polymers which meet the requirements of these applications. The demands can be challenging, since many polymer properties are directly or indirectly interrelated, i.e. improving a specific property can only be accomplished on the expense of another property. An example of properties in polypropylene that are interrelated are impact strength and stiffness.

It is known that the impact strength of a polypropylene can be improved by dispersing a rubber phase within the polymer matrix, thereby obtaining a heterophasic polypropylene composition. However, this will result in a reduction of the stiffness of the polypropylene.

Stiffness can for instance be improved by increasing the crystallinity of the composition, for instance by increasing the amount of isotactic homopolymer within the composition. However, when improving the stiffness, the material becomes more brittle, which decreases the impact properties.

One disadvantage of polypropylene resins is that in most molding processes they are subject to significant post-molding shrinkage. This means that in applications where dimensional tolerances are important, the mold must be tailored to the specific composition and the specific molding operation to yield a finished part of the precise dimension, which is required.

This shrinkage problem is particularly troublesome where the manufacturer has molds tailored to a certain composition and molding operation and subsequently wishes to substitute a different composition or alter the process to e.g. increase the cooling rate.

WO1996019533 cited that in the art, several attempts have been made to reduce shrinkage by incorporating shrinkage control agents such as talc and inorganic fillers into the polymer material. However, the use of shrinkage control agents reduces flexibility, decrease toughness, and degrades the surface finish of the completed part.

Furthermore, WO1996019533 indicates that as an alternative to shrinkage control agents, the formulation of the heterophasic polypropylene may be changed by increasing the content of the rubber phase within the polymer matrix of the heterophasic polypropylene composition.

However, the increase of the rubber phase reduces the stiffness of a heterophasic polypropylene composition.

### SUMMARY

It is therefore an object of the present invention to provide a polypropylene composition having a low shrinkage while having a good impact strength/stiffness balance.

This object is achieved by a polypropylene composition comprising a heterophasic propylene copolymer, wherein the heterophasic propylene copolymer consists of:

a propylene homopolymer matrix in an amount from 71 to 92 wt%, preferably from 78 to 89 wt%, more preferably from 84 to 89 wt% based on the heterophasic propylene copolymer,

an ethylene-propylene copolymer in an amount from 8 to 29 wt%, preferably from 10 to 29, more preferably 11 to 29 wt%, even more preferably from 11 to 22 wt%, even more preferably from 11 to 16 wt% based on the heterophasic propylene copolymer and

wherein t the amount of units derived from ethylene based on the ethylene-propylene copolymer is between 42 and 60 wt%, more preferably 42 and 55 wt%, more preferably 45 and 51 wt% and

wherein the polypropylene composition has

a melt flow rate (MFR) in the range from 0.50 to 120 dg/min, wherein the melt flow rate is determined using ISO1133-1:2011 using 2.16kg at 230°C and

a ratio of methylene sequence n>5 over the amount of units derived from ethylene based on the ethylene-propylene copolymer of less than 0.32, preferably less than 0.30.

Another aspect of the invention is a polypropylene composition comprising a heterophasic propylene copolymer, wherein the heterophasic propylene copolymer consists of:

a propylene homopolymer matrix in an amount from 71 to 92 wt%, preferably from 78 to 89 wt%, more preferably from 84 to 89 wt% based on the heterophasic propylene copolymer,
an ethylene-propylene copolymer in an amount from 8 to 29 wt%, preferably from 10 to 29, more preferably 11 to 29 wt%, even more preferably from 11 to 22 wt%, even more preferably from 11 to 16 wt% based on the heterophasic propylene copolymer and
wherein t the amount of units derived from ethylene based on the ethylene-propylene copolymer is between 42 and 60 wt%, more preferably 42 and 55 wt%, more preferably 45 and 51 wt% and
wherein the polypropylene composition has
a melt flow rate (MFR) in the range from 0.50 to 120 dg/min, wherein the melt flow rate is determined using ISO1133-1:2011 using 2.16kg at 230°C and
a methylene sequence n>5 below 16.

## DESCRIPTION OF EMBODIMENTS

Heterophasic propylene copolymer

The polypropylene composition according to the invention comprises a heterophasic propylene copolymer. The heterophasic propylene copolymer consists of:

- a propylene homopolymer matrix in an amount from 71 to 92 wt%, preferably from 78 to 89 wt%, more preferably from 84 to 89 wt% based on the heterophasic propylene copolymer,
- an ethylene-propylene copolymer in an amount from 8 to 29 wt%, preferably from 10 to 29, more preferably 11 to 29 wt%, even more preferably from 11 to 22 wt%, even more preferably from 11 to 16 wt% based on the heterophasic propylene copolymer and
- wherein the amount of units derived from ethylene based on the ethylene-propylene copolymer is between 42 and 60 wt%, more preferably 42 and 55 wt%, more preferably 45 and 51 wt%.

The amount of propylene homopolymer matrix and ethylene-propylene copolymer is 100wt% based on the heterophasic propylene copolymer. The amount of the ethylene-propylene copolymer with respect to the heterophasic propylene copolymer (herein sometimes referred as RC) and the amount of units derived from ethylene with respect to the ethylene-propylene copolymer in the heterophasic propylene copolymer (herein sometimes referred as RCC2) can be determined by $^{13}$C-NMR spectroscopy.

Preferably, the polypropylene composition has a Cold Xylene Soluble content (CXS) in the range from 8 to 29 wt%, preferably from 10 to 28, more preferably 11 to 22 wt%, even more preferably from 11 to 16 wt%, wherein the Cold Xylene Soluble content (CXS) is measured in accordance with CRYSTEX Method for heterophasic propylene copolymer according to the description.

Preferably, the heterophasic propylene copolymer has a melt flow rate (MFR) in the range from 0.50 to 120 dg/min, wherein the melt flow rate is determined using ISO1133-1:2011 using 2.16kg at 230°C.

In some preferred embodiments, the MFR of the heterophasic propylene copolymer determined using ISO1133-1:2011 using 2.16kg at 230°C is 0.50 to 30 dg/min. In some preferred embodiments, the MFR of the heterophasic propylene copolymer determined using ISO1133-1:2011 using 2.16kg at 230°C is 30 to 110 dg/min.

In some embodiments, the heterophasic propylene copolymer within the polypropylene composition is prepared by visbreaking an intermediate heterophasic propylene copolymer having an initial melt flow rate (MFRinitial) from 0.5 to 50, preferably 0.5 to 40, more preferably 0.5 to 25 dg/min as determined according to ISO1133-1:2011 using 2.16kg at 230°C by contacting said intermediate heterophasic propylene copolymer in a melt mixing process with a peroxide in such an amount that a composition comprising a heterophasic propylene copolymer having the desired final melt flow rate (MFRfinal) from 0.5 to 120, preferably 0.5 to 80, more preferably 0.5 to 45dg/min as determined according to ISO1133-1:2011 using 2.16kg at 230°C is obtained.

The term "visbreaking" is well known in the field of the invention. For example methods of visbreaking polypropylene have been disclosed in US 4,282,076 and EP 0063654.

Several different types of chemical reactions which are well known can be employed for visbreaking propylene polymers. An example is thermal pyrolysis, which is accomplished by exposing a polymer to high temperatures, e.g., in an extruder at 350 °C or higher. Another approach is exposure to powerful oxidizing agents. A further approach is exposure to ionizing radiation. It is preferred however that visbreaking is carried out using a peroxide. Such materials, at elevated temperatures, initiate a free radical chain reaction resulting in beta-scission of the polypropylene molecules. The

visbreaking may be carried out directly after polymerisation and removal of unreacted monomer and before pelletisation (during extrusion in an extruder wherein shifting of the intermediate heterophasic propylene copolymer occurs). However, the invention is not limited to such an embodiment and visbreaking may also be carried out on already pelletised polypropylene, which polypropylene generally contains stabilisers to prevent degradation.

Examples of suitable peroxides include organic peroxides having a decomposition half-life of less than 1 minute at the average process temperature during the visbreaking step. Suitable organic peroxides include but are not limited to dialkyl peroxides, e.g. dicumyl peroxides, peroxyketals, peroxycarbonates, diacyl peroxides, peroxyesters and peroxydicarbonates. Specific examples of these include benzoyl peroxide, dichlorobenzoyi peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroyl peroxide, tert-butyl peracetate, a,a'-bis(tert-butylperoxy)diisopropylbenzene (Luperco® 802), 2,5- dimethyl-2,5-di(tert-butylperoxy)-3-hexene, 2,5-dimethyl-2,5-di(tert-butylperoxy)-hexane, tert-butyl perbenzoate, tert-butyl perphenylacetate, tert-butyl per-sec-octoate, tert-butyl perpivalate, cumyl perpivalate, cumene hydroperoxide, diisopropyl benzene hydroperoxide, 1 ,3-bis(t-butylperoxy- isopropyl)benzene, dicumyl peroxide, tert-butylperoxy isopropyl carbonate and any combination thereof. Preferably, a dialkyl peroxides is employed in the process according to the present invention. More preferably, the peroxide is a,a'-bis-(tert-butylperoxy)diisopropylbenzene, 2,5- dimethyl-2,5-di(tert-butylperoxy)-hexane or 3,6,9-Triethyl-3,6,9-trimethyl-1 ,4,7-triperoxonane. Preferably, the peroxide is selected from the group of non-aromatic peroxides.

It can easily be determined by the person skilled in the art through routine experimentation how much peroxide should be used to obtain a composition having the desired melt flow rate. This also depends on the half-life of the peroxide and on the conditions used for the melt-mixing, which in turn depend on the exact composition.

Preferably, the propylene homopolymer matrix before any step of visbreaking has a pentad isotacticity of at least 96wt.%, preferably of at least 97wt%, wherein the pentad isotacticity is determined using $^{13}C$ NMR and/or a melt flow rate ($MFR_{Hopol}$) as determined according to ISO1133-1:2011 using 2.16kg at 230°C in the range from 0.5 to 100, preferably 0.5 to 95, more preferably 0.5 to 85, even more preferably 2 to 40 dg/min.

Preferably, the melt flow rate of the ethylene-propylene copolymer ($MFR_{rubber}$) is in the range from 0.03 to 3.0 dg/min, preferably in the range from 0.04 to 2.5 dg/min, for example in the range from 0.05 to 2.0 dg/min, wherein the $MFR_{rubber}$ is calculated according to the following formula:

$$MFRrubber=10^\wedge((Log\ MFheterophasic\text{-}matrix\ content*Log\ MFR_{Hopol})/(rubber\ content))$$

wherein

MFRheterophasic is the MFR (dg/min) of the heterophasic propylene copolymer measured according to ISO1133-1:2011 (2.16 kg/230°C),
$MFR_{Hopol}$ is the MFR (dg/min) of the propylene homopolymer matrix measured according to ISO1133-1:2011 (2.16 kg/230°C),
matrix content is the fraction of the propylene homopolymer matrix in the heterophasic propylene copolymer,
rubber content is the fraction of the ethylene-propylene copolymer in the heterophasic propylene copolymer. For the avoidance of any doubt, Log in the formula means log10.

Preferably, the propylene homopolymer matrix has a molecular weight distribution (Mw/Mn) in the range from 1.0 to 11.0, more preferably in the range from 4.0 to 9.0, wherein Mw stands for the weight average molecular weight and Mn stands for the number average weight and wherein Mw and Mn are measured according to ISO16014-1(4):2003.

<u>Process for the preparation of the heterophasic propylene copolymer</u>

Heterophasic propylene copolymers are generally prepared in one or more reactors, by polymerization of propylene in the presence of a catalyst and subsequent **polymerization of ethylene with** $\alpha$-olefins.

The heterophasic propylene copolymers employed in the process according to present invention can be produced using any conventional technique known to the skilled person, for example a multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the heterophasic propylene copolymer is made using Ziegler-Natta catalyst.

The heterophasic propylene copolymer may be prepared by a process comprising

- polymerizing propylene in the presence of a catalyst to obtain the propylene-based matrix and
- **subsequently polymerizing ethylene with** $\alpha$-olefins in the presence of a catalyst in the propylene-based matrix to obtain the heterophasic propylene copolymer. These steps are preferably performed in different reactors. The catalysts for the first step and for the second step may be different, but are preferably the same.

Catalyst

Ziegler-Natta catalysts are well known in the art. The term normally refers to catalysts comprising a transition metal containing solid catalyst compound (procatalyst) and an organo-metal compound (co-catalyst). Optionally one or more electron donor compounds (external donor) may be present in the catalyst as well.

The transition metal in the transition metal containing solid catalyst compound is normally chosen from groups 4-6 of the Periodic Table of the Elements (Newest IUPAC notation); more preferably, the transition metal is chosen from group 4; the greatest preference is given to titanium (Ti) as transition metal.

Although various transition metals are applicable, the following is focused on the most preferred one being titanium. It is, however, equally applicable to the situation where other transition metals than Ti are used. Titanium containing compounds useful in the present invention as transition metal compound generally are supported on hydrocarbon-insoluble, magnesium and/or an inorganic oxide, for instance silicon oxide or aluminum oxide, containing supports, generally in combination with an internal electron donor compound. The transition metal containing solid catalyst compounds may be formed for instance by reacting a titanium (IV) halide, an organic internal electron donor compound and a magnesium and/or silicon containing support. The transition metal containing solid catalyst compounds may be further treated or modified with an additional electron donor or Lewis acid species and/or may be subjected to one or more washing procedures, as is well known in the art.

Some examples of Ziegler-Natta (pro)catalysts and their preparation method which can suitably be used to prepare a heterophasic propylene copolymer can be found in EP 1 273 595, EP 0 019 330, US 5,093,415, Example 2 of US 6,825,146, US 4,771,024 column 10, line 61 to column 11, line 9, WO03/068828, US 4,866,022, WO96/32426A, example I of WO 2007/134851 A1 and in WO2015/091983.

The (pro)catalyst thus prepared can be used in polymerization of the heterophasic propylene copolymer using an external donor, for example as exemplified herein, and a co-catalyst, for example as exemplified herein.

In a preferred embodiment, the heterophasic propylene copolymer is made using a catalyst which is free of phthalate.

It is preferred to use so-called phthalate free internal donors because of increasingly stricter government regulations about the maximum phthalate content of polymers. In the context of the present invention, "essentially phthalate-free" or "phthalate-free" means having a phthalate content of less than for example 150 ppm, alternatively less than for example 100 ppm, alternatively less than for example 50 ppm, alternatively for example less than 20 ppm, for example of 0 ppm based on the total weight of the catalyst. Examples of phthalates include but are not limited to a dialkylphthalate esters in which the alkyl group contains from about two to about ten carbon atoms. Examples of phthalate esters include but are not limited to diisobutylphthalate, ethylbutylphthalate, diethylphthalate, di-n-butylphthalate, bis(2-ethylhexyl)phthalate, and diisodecylphthalate.

Examples of phthalate free internal donors include but are not limited to 1,3-diethers, for example 3,3-bis(methoxymethyl)-2,6-dimethylheptane, 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof.

The catalyst comprising the Ziegler-Natta pro-catalyst may be activated with an activator, for example an activator chosen from the group of benzamides and monoesters, such as alkylbenzoates.

The catalyst includes a co-catalyst. As used herein, a "co-catalyst" is a term well-known in the art in the field of Ziegler-Natta catalysts and is recognized to be a substance capable of converting the procatalyst to an active polymerization catalyst. Generally, the co-catalyst is an organometallic compound containing a metal from group 1, 2, 12 or 13 of the Periodic System of the Elements (Handbook of Chemistry and Physics, 70th Edition, CRC Press, 1989-1990). The co-catalyst may include any compounds known in the art to be used as "co-catalysts", such as hydrides, alkyls, or aryls of aluminum, lithium, zinc, tin, cadmium, beryllium, magnesium, and combinations thereof. The co-catalyst may be a hydrocarbyl aluminum co-catalyst as are known to the skilled person. Preferably, the cocatalyst is selected from trimethylaluminium, triethylaluminum, triisobutylaluminum, trihexylaluminum, di-isobutylaluminum hydride, trioctylaluminium, dihexylaluminum hydride and mixtures thereof, most preferably, the cocatalyst is triethylaluminium (abbreviated as TEAL).

Examples of external donors are known to the person skilled in the art and include but are not limited to external electron donors chosen from the group of compounds having a structure according to Formula III $(R^{90})_2N\text{-}Si(OR^{91})_3$, a compound having a structure according to Formula IV: $(R^{92})Si(OR^{93})_3$ and mixtures thereof wherein each of $R^{90}$, $R^{91}$, $R^{92}$ and $R^{93}$ groups are each independently a linear, branched or cyclic, substituted or unsubstituted alkyl having between 1

and 10 carbon atoms, preferably wherein $R^{90}$, $R^{91}$, $R^{92}$ and $R^{93}$ groups are each independently a linear unsubstituted alkyl having between 1 and 8 carbon atoms, for example ethyl, methyl or n-propyl, for example diethylaminotriethoxysilane (DEATES), n-propyl triethoxysilane, (nPTES), n-propyl trimethoxysilane (nPTMS); and organosilicon compounds having general formula $Si(OR^a)_{4-n}R^b{}_n$, wherein n can be from 0 up to 2, and each of $R^a$ and $R^b$, independently, represents an alkyl or aryl group, optionally containing one or more hetero atoms for instance O, N, S or P, with, for instance, 1-20 carbon atoms; such as diisobutyl dimethoxysilane (DiBDMS), t-butyl isopropyl dimethyxysilane (tBuPDMS), cyclohexyl methyldimethoxysilane (CHMDMS), dicyclopentyl dimethoxysilane (DCPDMS) or di(iso-propyl) dimethoxysilane (DiPDMS). More preferably, the external electron donor is chosen from the group of di(iso-propyl) dimethoxysilane (DiPDMS) or diisobutyl dimethoxysilane (DiBDMS).

Preferably, the heterophasic propylene copolymer is produced in a sequential multi-reactor polymerization process, for example in a gas-phase process, in the presence of a catalyst comprising

a) a Ziegler-Natta procatalyst comprising compounds of a transition metal of Group 4 to 6 of IUPAC, a Group 2 metal compound and an internal donor, wherein said internal donor preferably is a non-phthalic compound, more preferably a non-phthalic acid ester, even more preferably wherein said internal donor is selected from the group of for example 3,3-bis(methoxymethyl)-2,6-dimethylheptane, 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof;
b) a co-catalyst (Co), and
c) optionally an external donor.

Preferably, the Ziegler-Natta procatalyst is prepared by a process comprising the steps of:

a) contacting a compound $R^4{}_zMgX^4{}_{2-z}$ with an alkoxy- or aryloxy-containing silane compound to give a first intermediate reaction product, being a solid $Mg(OR^a)_xX^1{}_{2-x}$, wherein: $R^a$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms; wherein $R^4$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms, preferably $R^4$ is butyl; wherein **$X^4$ and $X^1$** are each independently selected **from the group of consisting of fluoride (F-), chloride (Cl-), bromide (Br-) or iodide (I-),** preferably chloride; z is in a range of larger than 0 and smaller than 2, being $0 < z < 2$, x is an integer between 0 and 2;
b) optionally contacting the solid $Mg(OR^a)_xX^1{}_{2-x}$ obtained in step i) with at least one activating compound selected from the group formed by activating electron donors and metal alkoxide compounds of formula $M^1(OR^b)_{v-w}(OR^3)_w$ or $M^2(OR^b)_{v-w}(R^3)_w$, to obtain a second intermediate product; wherein: $M^1$ is a metal selected from the group consisting of Ti, Zr, Hf, Al or Si; v is the valency of $M^1$; $M^2$ is a metal being Si; v is the valency of $M^2$; $R^b$ and $R^3$ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms, and preferably has from 1 to 20 carbon atoms; wherein w is smaller than v, preferably v being 3 or 4;
c) contacting the first or second intermediate reaction product, obtained respectively in step i) or ii), with a halogen-containing Ti-compound and an internal electron donor.

In preferred embodiments, the catalyst used for the preparation for the polypropylene composition according to the invention is the catalyst described in detail in WO2021/063930. The catalyst comprises a procatalyst, a co-catalyst and an external electron donor. The co-catalyst and the external electron donor may be those mentioned above.

In an embodiment, during step ii) as activating compounds an alcohol is used as activating electron donor and titanium tetraalkoxide is used as metal alkoxide compound.

In an embodiment, an activator is present. In an embodiment, said activator is ethyl benzoate. In an embodiment, said activator is a benzamide according to formula X:

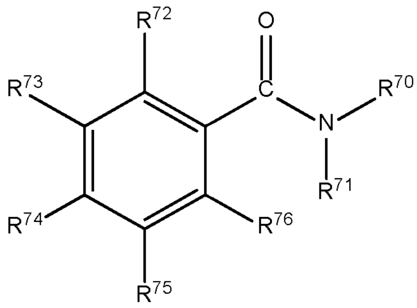

Formula X

wherein $R^{70}$ and $R^{71}$ are each independently selected from hydrogen or an alkyl, and $R^{72}$, $R^{73}$, $R^{74}$, $R^{75}$, $R^{76}$ are each independently selected from hydrogen, a heteroatom or a hydrocarbyl group, preferably selected from alkyl, alkenyl, aryl, aralkyl, alkoxycarbonyl or alkylaryl groups, and one or more combinations thereof, more preferably wherein $R^{70}$ and $R^{71}$ are both methyl and wherein $R^{72}$, $R^{73}$, $R^{74}$, and $R^{75}$ are all hydrogen, being N,N'-dimethylbenzamide (Ba-2Me).

In these preferred embodiments the internal electron donor used in the process for preparing the procatalyst is a compound according to Formula I:

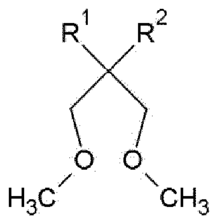

Formula I

wherein $R^1$ is a secondary alkyl group and $R^2$ is a non-secondary alkyl group having at least 5 carbon atoms, preferably $R^2$ is a non-secondary alkyl group having at least 5 carbon atoms being branched at the 3-position or further positions.

Preferably, the internal electron donors used are according to Formula I:

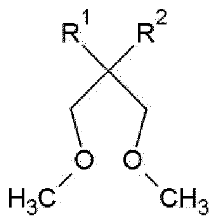

Formula I

wherein $R^1$ is a secondary alkyl group having at least three carbon atoms (C3), and $R^2$ is a non-secondary alkyl group having at least 5 carbon atoms, preferably $R^1$ and $R^2$ have at most seven carbon atoms (C7), preferably at most six carbon atoms (C6) preferably iso-propyl, iso-butyl, iso-pentyl, cyclopentyl, n-pentyl, and iso-hexyl. Preferably $R^2$ is branched at the 3-position or further positions.

In another embodiment, the internal electron donor is 3,3-bis(methoxymethyl)-2,6-dimethyl heptane, according to Formula I wherein R1 is iso-propyl being secondary alkyl and R2 is iso-pentyl being non-secondary and having a branch on the third carbon atom (abbreviated as iPiPen, wherein iP stands for iso-propyl and iPen stands for iso-pentyl, also known as 3-methyl-butyl). This compound iPiPen has a chemical formula of $C_{13}H_{28}O_2$; an exact mass of 216.21 and a molecular weight of 216.37. In a more specific embodiment, iPiPen is used as internal donor and N,N-dimethylbenzamide is preferably used as activator.

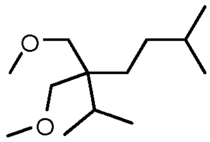

iPiPen

In another embodiment, the internal electron donor is (1-methoxy-2-(methoxymethyl)-5-methylhexan-2-yl) cyclopentane, according to Formula I wherein R1 is secondary alkyl cyclopentyl and R2 is secondary cyclopentyl (abbreviated as CPiPen, wherein CP stands for cyclopentyl and iPen stands for iso-pentyl, also known as 3-methyl-butyl). This compound CPiPen has a chemical formula of $C_{15}H_{30}O_2$; an exact mass of 242.22 and a molecular weight of 242.40. In a more specific embodiment, CPiPen is used as internal donor and N,N-dimethylbenzamide is preferably used as activator.

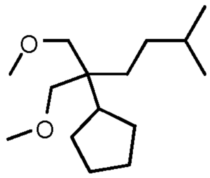

CPIPen

In another embodiment, the internal electron donor is 3,3-bis(methoxymethyl)-2,7-dimethyloctane, according to Formula I wherein R1 is the secondary alkyl iso-propyl and R2 is non-secondary iso-hexyl with a branch on the third carbon atom (abbreviated as iPiHex, wherein iP stands for iso-propyl and iHex stands for iso-hexyl, also known as 4-methyl-pentyl). This compound iPiHex has a chemical formula of $C_{14}H_{30}O_2$; an exact mass of 230.22 and a molecular weight of 230.39. In a more specific embodiment, iPiHex is used as internal donor and N,N-dimethylbenzamide is preferably used as activator.

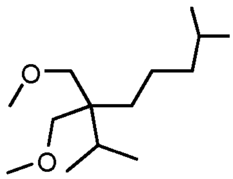

iPiHex

In another embodiment, the internal electron donor is 3,3-bis(methoxymethyl)-2-methyloctane, according to Formula I wherein R1 is secondary alkyl iso-propyl and R2 is non-secondary non-branched n-pentyl (abbreviated as iPnPen, wherein iP stands for iso-propyl and nPen stands for n-pentyl). This compound iPnPen has a chemical formula of $C_{13}H_{28}O_2$ ; an exact mass of 216.21 and a molecular weight of 216.37. In a more specific embodiment, iPnPen is used as internal donor and N,N-dimethylbenzamide is preferably used as activator.

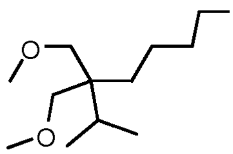

iPnPen

In another embodiment, the internal electron donor is 3,3-bis(methoxymethyl)-2,6-dimethyloctane, according to Formula I wherein R1 is secondary alkyl iso-propyl and R2 is non-secondary branched iso-hexyl having a branch at the third carbon atom (abbreviated as iPiHex, wherein iP stands for iso-propyl and wherein iHex stands for iso-hexyl, also known as 3-methyl-pentyl). This compound iPiHex has a chemical formula of $C_{14}H_{32}O_2$; an exact mass of 230.22 and a molecular weight of 230.39. In a more specific embodiment, iPiHex is used as internal donor and N,N-dimethylbenzamide

is preferably used as activator.

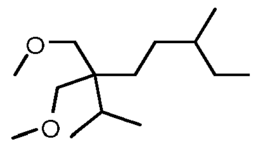

iPiHex

In an embodiment, the substituent R1 is isopropyl or cyclopentyl. In an embodiment, the substituent R2 is isopentyl or isohexyl. The below table shows the embodiments above with their abbreviations and the R1 and R2 groups as well if these groups are secondary or not and branched or not.

According to the present invention, it is further preferred that R1 is a secondary alkyl group and R2 is a non-secondary alkyl group being branched at the 3-position or further positions.

| Abbrev | $R^1$ | | | $R^2$ | | |
|---|---|---|---|---|---|---|
| | secondary | branched | # C | secondary | branched | # C |
| iPiPen | Yes (iP) | Yes at 1 | 3 | No (iPen) | Yes at 3 | 5 |
| CPiPen | Yes (CP) | Yes at 1 | 5 | No (iPen) | Yes at 3 | 5 |
| iPiHex | Yes (iP) | Yes at 1 | 3 | No (iHex) | Yes at 4 | 6 |
| iPnPen | Yes (iP) | Yes at 1 | 3 | No (nPen) | No | 5 |
| iPiHex | Yes (iP) | Yes at 1 | 3 | No (iHex) | Yes at 3 | 6 |

Preferably, the molar ratio of Al in the co-catalyst to Si in the external electron donor is 1 to 120, for example at least 1 and at most 15 or more than 15 and at most 120.

Preferably, the molar ratio of Si in the external electron donor to Ti in the procatalyst is 10 to 30.

Preferably, the molar ratio of Al in the co-catalyst to Ti in the procatalyst is 50 to 170.

Preferably the Endgroups n-butyl (/1000C) range is between 0.01 and 0.50, preferably between 0.05 and 0.35, more preferably 0.09 and 0.30.

Composition

The polypropylene composition has a melt flow rate (MFR) in the range from 0.50 to 120 dg/min, wherein the melt flow rate is determined using ISO1133-1:2011 using 2.16kg at 230°C. In some preferred embodiments, the MFR of the polypropylene composition determined using ISO1133-1:2011 using 2.16kg at 230°C is 0.50 to 30 dg/min. In some preferred embodiments, the MFR of the polypropylene composition determined using ISO1133-1:2011 using 2.16kg at 230°C is 30 to 120 dg/min.

In an embodiment of the invention, the polypropylene composition has methylene sequence n>5 of below 16 wherein Methylene sequence n>5 is determined by means of $C^{13}$-NMR, preferably according to the methodology described by J.C. Randall in "Polymer sequence determination Carbon 13 NMR Method", Academic Press (1977) and in "Methylene Sequence Distribution and number average sequences lengths in ethylene-propylene copolymer", Macromolecules Vol.11,No1, p33, (1978).

In an embodiment of the invention, the polypropylene composition has a ratio Methylene sequence n>5 over the amount units derived from ethylene based on the ethylene-propylene copolymer of less than 0.32, preferably less than 0.30 wherein Methylene sequence n>5 is determined by means of $C^{13}$-NMR preferably according to the methodology described by J.C. Randall in "Polymer sequence determination Carbon 13 NMR Method", Academic Press (1977) and in "Methylene Sequence Distribution and number average sequences lengths in ethylene-propylene copolymer", Macromolecules Vol.11, No1, p33, (1978).

Preferably, the amount of heterophasic propylene copolymer is at least 95 wt%, preferably more than 96wt%, more preferably more than 97 wt% even more preferably more than 98 wt% based on the polypropylene composition.

Inorganic filler

The composition according to the invention may comprise an inorganic filler. Suitable examples of the inorganic

filler include talc, calcium carbonate, wollastonite, barium sulphate, kaolin, glass flakes, laminar silicates (bentonite, montmorillonite, smectite) and mica. For example, the inorganic filler is chosen from the group of talc, calcium carbonate, wollastonite, mica and mixtures thereof. More preferably, the inorganic filler is talc.

Preferably, the inorganic filler has a median diameter d50 determined according to ISO13320-1:2020 of 5 to 20 μm, preferably 3 to 15 μm.

The composition according to the invention may be free of or substantially free of an inorganic filler. For example, the composition according to the invention may comprise less than 1.0 wt%, less than 0.1 wt% or less than 0.01 wt% of an inorganic filler.

Additives

In some embodiments, the polypropylene composition further comprises additives, for example in an amount of 0.10 to 1.0 wt% based on the polypropylene composition.

Suitable additives include but are not limited to stabilizers. The stabilizer may e.g. be selected from heat stabilizers, anti-oxidants and/or UV stabilizers. Examples include common stabilizers such as Irgafos 168, Irganox 1010 and/or Irganox B225.

The additives may further include nucleating agents, colorants, like pigments and dyes; clarifiers; surface tension modifiers; lubricants; flame-retardants; mould-release agents; flow improving agents; plasticizers; anti-static agents; blowing agents; slip agents.

In one aspect, the invention provides an article comprising the polypropylene composition of the invention. Preferably, the amount of the polypropylene composition is at least 95wt% based on the article. Preferably, the article is prepared by injection molding. Preferably, the article is a household article such as vacuum-cleaner housing, household chemicals and paints, or a packaging article such as containers, crates, boxes, battery case, pails, flowerpots, foodstuff containers/packaging, ice-cream container, thin wall packaging, caps and closure, healthcare packaging, or a healthcare article such as drug delivery article, laboratory ware, a medical device, a medical diagnostics article or an automotive interior article such as instrument panel carriers, door panels, dashboards, dashboard carriers, door claddings, door fixtures, armrests, pillar cladding, seat cladding, boot cladding, interior trims and applications in heating, ventilation, air conditioning (HVAC) applications.

In one aspect, the invention provides use of the polypropylene composition of the invention for the preparation of an article. Preferably, the amount of the polypropylene composition is at least 95wt% based on the article. Preferably, the article is prepared by injection molding. Preferably, the article is a household article such as vacuum-cleaner housing, household chemicals and paints, or a packaging article such as containers, crates, boxes, battery case, pails, flowerpots, foodstuff containers/packaging, ice-cream container, thin wall packaging, caps and closure, healthcare packaging, or a healthcare article such as drug delivery article, laboratory ware, a medical device, a medical diagnostics article or an automotive interior article such as instrument panel carriers, door panels, dashboards, dashboard carriers, door claddings, door fixtures, armrests, pillar cladding, seat cladding, boot cladding, interior trims and applications in heating, ventilation, air conditioning (HVAC) applications.

In one aspect, the invention provides a process for the preparation of an article comprising the steps of:

a. providing the polypropylene composition of the invention and
b. converting the polypropylene composition into an article, for example by using an extrusion or injection molding process

In one aspect, the invention provides a process for preparing the polypropylene composition according to the invention, comprising

i) polymerizing propylene in the presence of a catalyst to obtain the propylene homopolymer matrix and
ii) subsequently polymerizing ethylene with propylene in the presence of a catalyst in the propylene homopolymer matrix to obtain the heterophasic propylene copolymer, preferably wherein steps i) and ii) are performed in different reactors,

wherein steps i) and ii) are performed in the presence of a catalyst comprising

a. a Ziegler-Natta procatalyst comprising compounds of a transition metal of Group 4 to 6 of IUPAC, a Group 2 metal compound and an internal donor, wherein said internal donor is a non-phthalic compound, more preferably a non-phthalic acid ester, even more preferably wherein said internal donor is selected from the group of for example 3,3-bis(methoxymethyl)-2,6-dimethylheptane, 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof;
b. a co-catalyst (Co), and
c. optionally an external donor.

It is further noted that the invention relates to all possible combinations of features described herein, including all possible combinations of embodiments described herein, preferred in particular are those combinations of features or embodiments that are present in the claims. It will therefore be appreciated that all combinations of features or embodiment relating to the composition according to the invention; all combinations of features or embodiments relating to the process according to the invention and all combinations of features or embodiments relating to the composition according to the invention and features or embodiments relating to the process according to the invention are described herein.
It is further noted that the term 'comprising' does not exclude the presence of other elements. However, it is also to be understood that a description on a product/composition comprising certain components also discloses a product/-composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.
The invention is now elucidated by way of the following examples, without however being limited thereto.

## EXAMPLES

Process for preparation of procatalyst

For inventive examples E1, E2 and E3: the procatalyst is prepared according to the method disclosed in WO2021/063930A1, example 1;
For comparative examples CE1, CE2 and CE3: the procatalyst is prepared according to the method disclosed in US 4,866,022, example 1.

Process conditions for inventive examples E1, E2, E3, CE1 CE2 and CE3

Gas-phase polymerizations were performed in a set of two horizontal, cylindrical stirred bed, gas phase reactors in series to prepare the heterophasic propylene copolymers E1, E2, E3, CE1 CE2 and CE3.
The homopolymer was formed in the first reactor (R1) and an ethylene-propylene copolymer (also referred to in the example as "rubber" or "rubber phase") in the second one (R2) to prepare a heterophasic propylene copolymer. Both reactors were operated in a continuous way.
During operation, polypropylene powder produced in the first reactor was discharged through a powder discharge system into the second reactor.
The temperature of the powder bed is measured via a series of internal thermocouples. The data from these thermocouples is used to control the quench flow to the individual quench nozzles.
Hydrogen was fed independently to both reactors to control a melt flow index ratio over the homopolymer powder and copolymer powder. In this respect, RCC2 is the amount of ethylene incorporated in the rubber fraction (wt%) and RC is the amount of rubber incorporated in the heterophasic propylene copolymer (wt%) as determined by $^{13}$C-NMR spectroscopy.

Table 1 Reaction conditions of the heterophasic copolymers composition.

| | E1 | E2 | E3 | CE1 | CE2 | CE3 |
|---|---|---|---|---|---|---|
| Co-catalyst | TEA | TEA | TEA | TEA | TEA | TEA |
| External donor | DiPDMS | DiPDMS | DiPDMS | DiPDMS | DiPDMS | DiPDMS |
| Al/Ti (mol/mol) | 80 | 80 | 80 | 80 | 80 | 135 |
| Si/Ti (mol/mol) | 16 | 16 | 16 | 10 | 10 | 10 |
| Al/Si (mol/mol) | 5 | 5 | 5 | 8 | 8 | 13,5 |
| **Reactor 1** | | | | | | |
| Temp (°C) | 68 | 68 | 68 | 68 | 68 | 68 |
| Pressure (MPa) | 22 | 22 | 22 | 22 | 22 | 22 |

(continued)

| Reactor 1 | | | | | | |
|---|---|---|---|---|---|---|
| H2/C3 (mol/mol) | 0.012 | 0.043 | 0.0068 | 0.025 | 0.11 | 0.001 |
| BD (kg/m3) | 419.3 | 393.7 | 457 | 457 | 420 | 497 |
| $MFR_{hopol}$ (dg/min) | 12.1 | 80.8 | 5.2 | 10.7 | 82 | 4.9 |
| $CXS_{hopol}$ (wt%) | 1.57 | 2.09 | 1.27 | n.a. | n.a. | n.a. |
| **Reactor 2** | | | | | | |
| Temp (°C) | 63 | 63 | 63 | 63 | 63 | 63 |
| Pressure (MPa) | 22 | 22 | 22 | 22 | 22 | 22 |
| H2/C3 (mol/mol) | - | - | 0.0069 | 0.0135 | 0.0365 | 0.004 |
| C2/C3 (mol/mol) | 0.4 | 0.3 | 0.4 | 0.406 | 0.351 | 0.4 |
| Si/Ti is the ratio of the external donor (DiPDMS) to the procatalyst<br>Al/Si is the ratio of the co-catalyst (TEAL) to the external donor (DiPDMS)<br>H2/C3 is the molar ratio of hydrogen to propylene<br>C2/C3 is the molar ratio of ethylene to propylene. | | | | | | |

Table 2. Molecular properties.

| | E1 | E2 | E3 | CE1 | CE2 | CE3 |
|---|---|---|---|---|---|---|
| Mw/Mn (-) | 5.7 | 6.0 | 6.7 | 7.1 | 6.5 | 7.2 |
| RC (wt%) | 15.4 | 13.2 | 24.2 | 17.3 | 14.5 | 22.3 |
| RCC2 (wt%) | 47.1 | 47.1 | 50.3 | 58.1 | 55.4 | 59.0 |
| Endgroups n-butyl (/1000C) | 0.17 | 0.26 | 0.1 | 0.2 | 0.2 | 0.1 |
| MFRinitial | 6.0 | 41.3 | 1.6 | 5.3 | 42 | 1.4 |
| xylene soluble content (CXS) (wt%) | n.a | n.a | 21.1 | n.a | n.a | 15.7 |
| Isotacticity (Pentad mmm) (%) | 97.0 | 97.3 | 97.0 | 97.8 | 98 | 97.6 |
| Methylene sequences n>5 (wt%) | 13.6 | 12 | 14.8 | 20.6 | 20.5 | 20.8 |
| Methylene sequences/RCC2 | 0.29 | 0.25 | 0.29 | 0.35 | 0.37 | 0.37 |

Pelletization of the E1, E2, E3, CE1 CE2 and CE3

Pellets were prepared from the powder composition E1, E2, E3, CE1 CE2 and CE3 by extrusion process in a twin screw.

The respective compositions of the examples E4 and CE4 were prepared by extruding respectively E1 and CE1 powder, in a twin screw with 500 ppm Irganox 1010, 500 pm Irgafos 168 and 500 ppm calcium stearate.

The respective compositions of the examples E5 and CE5 were prepared by extruding E1 and CE1 powder, respectively in a twin screw with 500 ppm Irganox 1010, 500 pm Irgafos 168, 500 ppm calcium stearate and **as** $\alpha$-nucleating agents 500 ppm Mina 11 from Milliken and 0.025 wt% Luperox 101M050.

The respective compositions of the examples E6 and CE6 were prepared by extruding the E2 and CE2 powder, respectively in a twin screw with 500 ppm Irganox 1010, 500 pm Irgafos 168 and, 500 ppm calcium stearate **and as** $\alpha$-**nucleating** agents 0.5 w% talcum and 250 ppm Hyperform® HPN20E from Milliken, antistatic agent 2000 ppm Atmer 129, and 0.025 wt% Luperox 101M050.

The respective compositions of the examples E7 and CE7 were prepared by extruding the E3 and CE3 powder, respectively in a twin screw with 0,1215 wt% peroxide + 0,05wt% Calcium stearate + 0,5wt% talc + 0,2 wt% Irg B225.

Table 3. Properties of examples E3, E4, E5, E6, E7 and comparative examples CE3, CE4, and CE5 and CE6 and CE7.

| | E4 | CE4 | E5 | CE5 | E6 | CE6 | E7 | CE7 |
|---|---|---|---|---|---|---|---|---|
| MFRfinal (dg/min) | 7.0 | 6.3 | 14.1 | 14.4 | 70.4 | 61.3 | 14 | 14.4 |
| Izod 23L 7 d (kJ/m$^2$) | 10.2 | 9.3 | 7.4 | 7.3 | 3.7 | 5.51 | 53.1 | 18.9 |
| Izod 0L 7d (kJ/m$^2$) | 5.6 | 5.2 | 4.9 | 4.5 | 3.1 | 3.79 | 10.2 | 9.2 |
| Izod -20L 7d (kJ/m$^2$) | 4.0 | 3.6 | 4.3 | 4.0 | 2.5 | 2.97 | 7.1 | 7.1 |
| Flex Mod II 7d (MPa) | 1304 | 1339 | 1554 | 1605 | 1714 | 1631 | 1062 | 1169 |
| RC (wt%) | 15.4 | 17.3 | 15.4 | 17.3 | 13.2 | 14.8 | 24.2 | 23.4 |
| RCC2 (wt%) | 47.1 | 58.1 | 47.1 | 58.1 | 47.1 | 55.4 | 50,3 | 56.4 |
| Shrinkage (%) | 1.46 | 1.57 | 1.46 | 1.52 | 1.38 | 1.48 | 1.39 | 1.47 |
| Methylene sequences n>5 (wt%) | 13.6 | 20.6 | 13.6 | 20.6 | 12 | 20.5 | 14.8 | 20.8 |
| Methylene sequences/RCC2 | 0.29 | 0.35 | 0.29 | 0.35 | 0.25 | 0.37 | 0.29 | 0,37 |
| xylene soluble content (CXS) (wt%) | n.a | n.a | n.a | n.a | n.a | n.a | 21.6 | 17.7 |
| Endgroups n-butyl (/1000C) | 0.17 | 0.2 | 0.17 | 0.2 | 0.26 | 0.2 | 0.1 | 0.1 |

It can be seen from the above table, the heterophasic PP compositions according to the invention show less shrinkage without increasing the rubber phase which would impact the stiffness of the material.

**Measurement methods**

Shrinkage method:

Shrinkage 3-D measurement ISO 294-4 (+ 1hr 90°C) @ 23°C after 1 days

MFR

The MFRhopol, MFRinitial and MFRfinal of the heterophasic propylene copolymer composition, the matrix phase and the dispersed phase measured according to ISO1133 using a 2.16 kg load at 230.

Impact strength

Impact strength was determined by measuring the Izod impact strength at 23°C, 0 °C and -20°C according to ISO 180 4A. Test geometry: 65*12.7*3.2 mm, notch 45° according to ISO 37/2, in perpendicular orientation.

Flexural modulus

Flexural modulus was determined according to ASTM D790-10 at 23 °C in parallel (II) orientation. Test geometry: 65*12.7*3.2 mm.

RC, RCC2 and TC2

RC and RCC2 were determined by $^{13}$C-NMR spectroscopy. To this end, approximately 150 mg of material was dissolved in 1,1,2,2-tetrachloroethane-d2 (TCE-d2). To ensure a homogeneous solution, the sample preparation has been conducted in a heated rotary oven. The NMR measurements were carried out in the solution-state using a Bruker 500 Advance III HD spectrometer operating at 500.16 and 125.78 MHz for 1H and 13C, respectively, and equipped with a 10 mm DUAL cryogenically-cooled probe head operating at 125 °C. The 13C-NMR experiments were performed using standard single pulse excitation utilizing the NOE and bi-level WALTZ16 decoupling scheme (Zhou Z. et al. J. Mag. Reson 187 (2007) 225. A total of 512 transients were acquired per spectrum. The spectra were calibrated by setting the central signal of TCE's triplet at 74.2 ppm. Quantitative 13C NMR spectra were processed, integrated and relevant quantitative properties determined from the integrals using proprietary computer programs.

The total ethylene content (TC2) of the copolymer was calculated from the RC and RCC2.

CRYSTEX method

The CRYSTEX method described in WO2019179959 and herein below can determine the following properties of a heterophasic propylene copolymer:

- Amount of amorphous soluble fraction in the heterophasic propylene copolymer (CXS).

The measurement of this property may be performed according to CRYSTEX method by a CRYSTEX QC instrument of CRYSTEX QC Polymer Char (Valencia, Spain). A schematic representation of the CRYSTEX QC instrument is presented in Del Hierro, P.; Ortin, A.; Monrabal, B.; 'Soluble Fraction Analysis in polypropylene, The Column', February 2014. Pages 18-23.

The CRYSTEX QC instrument comprises an infrared detector (IR4) and an online 2- capillary viscometer. Quantification was done by the infrared detector which detects IR absorbance at two different bands (CH3 and CH2)..

The machine was calibrated using using the Cold Xylene Soluble (CXS) and Cold Xylene Insoluble (CXI) fractions of various propylene polymers with known CXS content determined according to standard gravimetric method according to ISO16152.

*CRYSTEX Method for heterophasic propylene copolymer*

A sample of the heterophasic propylene copolymer to be analyzed is weighed in concentrations of 5 mg/mL. After automated filling of the vial with 1,2,4-TCB containing 250 mg/L 2,6-tert-butyl-4-methylphenol (BHT) as antioxidant, the sample is dissolved at 170°C until complete dissolution is achieved, for 120 min, with constant stirring of 800rpm.

*CRYSTEX method for propylene homopolymer*

A sample of the PP homopolymer (coming out of the $1^{st}$ reactor: propylene homopolymer matrix) to be analyzed is weighed in concentrations of 10 mg/mL. After automated filling of the vial with 1,2,4-TCB containing 250 mg/L 2,6-tert-butyl-4-methylphenol (BHT) as antioxidant, the sample is dissolved at 170°C until complete dissolution is achieved, for 60 min, with constant stirring of 800rpm.

Methylene sequences n>5

wt% number of methylene group present between two consecutive methyl and methylene groups in the polymeric chain with respect to the total of uninterrupted methylene sequence (superior to 5) and determined by means of $^{13}$C-NMR according to the methodology described by J.C. Randall in "Polymer sequence determination Carbon 13 NMR Method", Academic Press 1977 and in "Methylene Sequence Distribution and number average sequences lengths in ethylene-propylene copolymer" Macromolecules Vol.11,No1, p33, (1978).

Endgroups n-butyl (/1000C)

Endgroups n-butyl (/1000C) was determined according to Carvill et al., Macromolecules 1998, 31, 3783-3789 wherein the $^{13}$C NMR spectra was measured at 125°C in TCE-d2 by integrating the signal at 14.15 ppm, after calibration of the spectrum using the TCE signal at 74.2 ppm and using a chemical shift correction of +2.1ppm to account for the measurement temperature difference in Carvill et al. and 125°C as used in the method of the examples herein. The number of n-butyl end-groups is expressed "per 1000C".

Isotacticity $^{13}$C NMR

175 mg of the polypropylene pellet was dissolved in 3 ml at 130°C in deuterated tetrachloroethylene (C2D2Cl4) containing 2,6-Di-tert-butyl-4-methylphenol (BHT) (5 mg BHT in 200 ml C2D2CL). The $^{13}$C NMR spectrum was recorded on a Bruker Avance 500 spectrometer equipped with a cryogenically cooled probe head operating at 125°C.

The isotacticity of the mmmm pentad levels was determined from the $^{13}$C NMR spectrum in % based on the total pentad amount.

GPC / SEC

The number average molecular weight (Mn), the weight average molecular weight (Mw) and the Z average molecular weight (Mz) were determined using ISO16014-1(4):2003. SEC-DV was used with universal calibration. SEC

measurements were performed on a PolymerChar GPC system. The samples were dissolved in 1,2,4-trichlorobenzene (TCB) stabilized with 1 g/L butylhydroxytoluene (BHT) at concentrations of 0.3 - 1.3 mg/mL for 4 hours at 160 °C. 300 μL of polymer solution was injected and the mobile phase flow rate was 1.0 ml/min. Infrared detection IR5 MCT and a differential viscometer were used. For setting up the universal calibration line polyethylene standards were used.

**Claims**

**1.** Polypropylene composition comprising a heterophasic propylene copolymer

wherein the heterophasic propylene copolymer consists of:

- a propylene homopolymer matrix in an amount from 71 to 92 wt%, preferably from 78 to 89 wt%, more preferably from 84 to 89 wt% based on the heterophasic propylene copolymer,
- an ethylene-propylene copolymer in an amount from 8 to 29 wt%, preferably from 10 to 29, more preferably 11 to 29 wt%, even more preferably from 11 to 22 wt%, even more preferably from 11 to 16 wt% based on the heterophasic propylene copolymer and
- wherein the amount of units derived from ethylene based on the ethylene-propylene copolymer is between 42 and 60 wt%, more preferably 42 and 55 wt%, more preferably 45 and 51 wt% and

wherein the polypropylene composition has

- a melt flow rate (MFR) in the range from 0.50 to 120 dg/min, wherein the melt flow rate is determined using ISO1133-1:2011 using 2.16kg at 230°C and
- a ratio of methylene sequence n>5 over the amount of units derived from ethylene based on the ethylene-propylene copolymer of less than 0.32, preferably less than 0.30.

**2.** Polypropylene composition comprising a heterophasic propylene copolymer

wherein the heterophasic propylene copolymer consists of:

- a propylene homopolymer matrix in an amount from 71 to 92 wt%, preferably from 78 to 89 wt%, more preferably from 84 to 89 wt% based on the heterophasic propylene copolymer,
- an ethylene-propylene copolymer in an amount from 8 to 29 wt%, preferably from 10 to 29, more preferably 11 to 29 wt%, even more preferably from 11 to 22 wt%, even more preferably from 11 to 16 wt% based on the heterophasic propylene copolymer and
- wherein the amount of units derived from ethylene based on the ethylene-propylene copolymer is between 42 and 60 wt%, more preferably 42 and 55 wt%, more preferably 45 and 51 wt% and

wherein the polypropylene composition has

- a melt flow rate (MFR) in the range from 0.50 to 120 dg/min, wherein the melt flow rate is determined using ISO1133-1:2011 using 2.16kg at 230°C and
- a methylene sequence n>5 of below 16.

**3.** Polypropylene composition according to any one of the preceding claims, wherein the heterophasic propylene copolymer within the polypropylene composition is prepared by visbreaking an intermediate heterophasic propylene copolymer having an initial melt flow rate (MFRinitial) from 0.5 to 50, preferably 0.5 to 40, more preferably 0.5 to 25 dg/min as determined according to ISO1133-1:2011 using 2.16kg at 230°C by contacting said intermediate heterophasic propylene copolymer in a melt mixing process with a peroxide in such an amount that a composition comprising a heterophasic propylene copolymer having the desired final melt flow rate (MFRfinal) from 0.5 to 120, preferably 0.5 to 80, more preferably 0.5 to 45dg/min as determined according to ISO1133-1:2011 using 2.16kg at 230°C is obtained.

**4.** Polypropylene composition according to any one of the preceding claims, wherein the polypropylene composition has a Cold Xylene Soluble content (CXS) in the range from 8 to 29 wt%, preferably from 10 to 28, more preferably 11 to 22 wt%, even more preferably from 11 to 16 wt%, wherein the Cold Xylene Soluble content (CXS) is measured in accordance with CRYSTEX Method for heterophasic propylene copolymer according to the description.

**5.** Polypropylene composition according to any one of the preceding claims, wherein the propylene homopolymer matrix has a Cold Xylene Soluble content (CXS) in the range from 1 to 4 wt%, preferably from 1 to 3 wt%, wherein the Cold Xylene Soluble content (CXS) is measured in accordance with CRYSTEX Method for propylene homopolymer according to the description.

**6.** Polypropylene composition according to one of the preceding claims, wherein the propylene homopolymer matrix before any step of visbreaking has

a. a pentad isotacticity of at least 96wt.%, preferably of at least 97wt%, wherein the pentad isotacticity is determined using $^{13}C$ NMR and/or
b. a melt flow rate ($MFR_{Hopol}$) as determined according to ISO1133-1:2011 using 2.16kg at 230°C in the range from 0.5 to 100, preferably 0.5 to 95, more preferably 0.5 to 85, even more preferably 2 to 40 dg/min.

**7.** Polypropylene composition according to any one of the preceding claims, wherein the heterophasic propylene copolymer has methylene sequence n>5 of below 16.

**8.** Polypropylene composition according to any one of the preceding claims, wherein the amount of heterophasic propylene copolymer is at least 95 wt% based on the polypropylene composition and/or the polypropylene composition further comprises additives, for example in an amount of 0.10 to 2.0 wt% based on the polypropylene composition.

**9.** Polypropylene composition according to any one of the preceding claims, wherein the heterophasic propylene copolymer is produced in a sequential multi-reactor polymerization process in the presence of a catalyst comprising

a. a Ziegler-Natta procatalyst comprising compounds of a transition metal of Group 4 to 6 of IUPAC, a Group 2 metal compound and an internal donor, wherein said internal donor preferably is a non-phthalic compound, more preferably a non-phthalic acid ester, even more preferably wherein said internal donor is selected from the group of for example 3,3-bis(methoxymethyl)-2,6-dimethylheptane, 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof;
b. a co-catalyst (Co), and
c. optionally an external donor.

**10.** Polypropylene composition according to claim 7, wherein Ziegler-Natta procatalyst is prepared according to the following step:

a. contacting a compound $R^4_zMgX^4_{2-z}$ with an alkoxy- or aryloxy-containing silane compound to give a first intermediate reaction product, being a solid $Mg(OR^a)_xX^1_{2-x}$, wherein: $R^a$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms; wherein $R^4$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms, preferably $R^4$ is butyl; wherein $X^4$ and $X^1$ are each independently selected from the group of consisting of fluoride (F-), chloride (Cl-), bromide (Br-) or iodide (I-), preferably chloride; z is in a range of larger than 0 and smaller than 2, being $0 < z < 2$, x is an integer between 0 and 2;
b. optionally contacting the solid $Mg(OR^a)_xX^1_{2-x}$ obtained in step i) with at least one activating compound selected from the group formed by activating electron donors and metal alkoxide compounds of formula $M^1(OR^b)_{v-w}(OR^3)_w$ or $M^2(OR^b)_{v-w}(R^3)_w$, to obtain a second intermediate product; wherein: $M^1$ is a metal selected from the group consisting of Ti, Zr, Hf, Al or Si; v is the valency of $M^1$; $M^2$ is a metal being Si; v is the valency of $M^2$; $R^b$ and $R^3$ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms, and preferably has from 1 to 20 carbon atoms; wherein w is smaller than v, preferably v being 3 or 4;
c. contacting the first or second intermediate reaction product, obtained respectively in step a) or b), with a halogen-containing Ti-compound and internal electron donor.

**11.** Polypropylene composition according to claim 7 or 8, wherein the internal donor is 3,3-bis(methoxymethyl)-2,6-dimethylheptane, and/or wherein the activating compound is N-N-dimethylbenzamide and/or wherein the co-catalyst is preferably selected from the group consisting of trimethylaluminum, triethylaluminum, triisobutylaluminum, trihexylaluminum, di-isobutylaluminum hydride, trioctylaluminium, dihexylaluminum hydride and mixtures thereof

**12.** Polypropylene composition according to claim 7 to 9, wherein the external donor is selected from the list comprising organo-silicon compounds, silanes, alkoxy silanes, alkyl silane, alkyl alkoxy silane and aliphatic/aromatic ester, for example dicyclopentyldimethoxysilane, di-tert-butyldimethoxysilane, methylcyclohexyldimethoxysilane, ethylcyclohexyldimethoxysilane, diphenyldimethoxysilane, diisopropyldimethoxysilane, di-n-propyldimethoxysilane, diisobutyldimethoxysilane, di-n-butyldimethoxysilane, cyclopentyltrimethoxysilane, isopropyltrimethoxysilane, npropyltrimethoxysilane, n-propyltriethoxysilane, ethyltriethoxysilane, tetramethoxysilane, tetraethoxysilane, cyclopentylpyrrolidinodimethoxysilane, bis(pyrrolidino )-dimethoxysilane, and mixtures thereof, preferentially di(iso-propyl) dimethoxysilane (DiPDMS).

**13.** Article comprising the polypropylene composition of any one of the preceding claims,

wherein the amount of the polypropylene composition is at least 95wt% based on the article and/or
wherein the article is prepared by injection molding and/or,
wherein the article is a household article such as vacuum-cleaner housing, household chemicals and paints, or a packaging article such as containers, crates, boxes, battery case, pails, flowerpots, foodstuff containers/packaging, ice-cream container, thin wall packaging, caps and closure, healthcare packaging, or a healthcare article such as drug delivery article, laboratory ware, a medical device, a medical diagnostics article or an automotive interior article such as instrument panel carriers, door panels, dashboards, dashboard carriers, door claddings, door fixtures, armrests, pillar cladding, seat cladding, boot cladding, interior trims and applications in heating, ventilation, air conditioning (HVAC) applications.

**14.** Use of the polypropylene composition of any one of claims 1-10 for the preparation of an article,

wherein the amount of the polypropylene composition is at least 95wt% based on the article and/or
wherein the article is prepared by injection molding and/or,
wherein the article is a household article such as vacuum-cleaner housing, household chemicals and paints, or a packaging article such as containers, crates, boxes, battery case, pails, flowerpots, foodstuff containers/packaging, ice-cream container, thin wall packaging, caps and closure, healthcare packaging, or a healthcare article such as drug delivery article, laboratory ware, a medical device, a medical diagnostics article or an automotive interior article such as instrument panel carriers, door panels, dashboards, dashboard carriers, door claddings, door fixtures, armrests, pillar cladding, seat cladding, boot cladding, interior trims and applications in heating, ventilation, air conditioning (HVAC) applications.

**15.** Process for the preparation of an article comprising the steps of

a. providing the polypropylene composition of any one of claims 1-10 and
b. converting the polypropylene composition into an article, for example by using an extrusion or injection molding process.

**16.** Process for preparing the polypropylene composition of any one of claims 1 to 10, comprising

i) polymerizing propylene in the presence of a catalyst to obtain the propylene homopolymer based matrix and
ii) subsequently polymerizing ethylene with propylene in the presence of a catalyst in the propylene homopolymer matrix to obtain the heterophasic propylene copolymer,
wherein steps i) and ii) are performed in different reactors,
wherein the catalysts used in step i) and for the second step ii) comprise

a. a Ziegler-Natta procatalyst comprising compounds of a transition metal of Group 4 to 6 of IUPAC, a Group 2 metal compound and an internal donor, wherein said internal donor preferably is a non-phthalic compound, more preferably a non-phthalic acid ester, even more preferably wherein said internal donor is selected from the group of for example 3,3-bis(methoxymethyl)-2,6-dimethylheptane, 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof;

b. a co-catalyst (Co), and
c. optionally an external donor.

**17.** Process according to claim 16, wherein Ziegler-Natta procatalyst is prepared according to the following steps:

a. contacting a compound $R^4_zMgX^4_{2-z}$ with an alkoxy- or aryloxy-containing silane compound to give a first intermediate reaction product, being a solid $Mg(OR^a)_xX^1_{2-x}$, wherein: $R^a$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms; wherein $R^4$ is a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms and preferably has from 1 to 20 carbon atoms, preferably $R^4$ is butyl; wherein $X^4$ **and $X^1$** are each independently selected from the group of consisting of **fluoride (F-), chloride (Cl-), bromide (Br-) or iodide (I-), preferably chloride;** z is in a range of larger than 0 and smaller than 2, being $0 < z < 2$;
b. optionally contacting the solid $Mg(OR^a)_xX^1_{2-x}$ obtained in step i) with at least one activating compound selected from the group formed by activating electron donors and metal alkoxide compounds of formula $M^1(OR^b)_{v-w}(OR^3)_w$ or $M^2(OR^b)_{v-w}(R^3)_w$, to obtain a second intermediate product; wherein: $M^1$ is a metal selected from the group consisting of Ti, Zr, Hf, Al or Si; v is the valency of $M^1$; $M^2$ is a metal being Si; v is the valency of $M^2$; $R^b$ and $R^3$ are each a linear, branched or cyclic hydrocarbyl group independently selected from alkyl, alkenyl, aryl, aralkyl, alkoxycarbonyl or alkylaryl groups, and one or more combinations thereof; wherein said hydrocarbyl group may be substituted or unsubstituted, may contain one or more heteroatoms, and preferably has from 1 to 20 carbon atoms; wherein w is smaller than v, preferably v being 3 or 4;
c. contacting the first or second intermediate reaction product, obtained respectively in step a) or b), with a halogen-containing Ti-compound and internal electron donor.

**Patentansprüche**

**1.** Polypropylenzusammensetzung, umfassend ein heterophasisches Propylen-Copolymer, wobei das heterophasische Propylen-Copolymer aus Folgendem besteht:

• einer Propylenhomopolymermatrix in einer Menge von 71 bis 92 Gew.-%, vorzugsweise von 78 bis 89 Gew.-%, bevorzugter von 84 bis 89 Gew.-%, bezogen auf das heterophasische Propylen-Copolymer,
• einem Ethylen-Propylen-Copolymer in einer Menge von 8 bis 29 Gew.-%, vorzugsweise von 10 bis 29, bevorzugter von 11 bis 29 Gew.-%, noch bevorzugter von 11 bis 22 Gew.-%, noch bevorzugter von 11 bis 16 Gew.-%, bezogen auf das heterophasische Propylen-Copolymer und
• wobei die Menge der aus Ethylen abgeleiteten Einheiten auf Basis des Ethylen-Propylen-Copolymers zwischen 42 und 60 Gew.-%, bevorzugter 42 und 55 Gew.-%, bevorzugter 45 und 51 Gew.-% liegt und

wobei die Polypropylenzusammensetzung Folgendes aufweist:

• eine Schmelze-Massefließrate (MFR) im Bereich von 0,50 bis 120 dg/min, wobei die Schmelze-Massefließrate nach ISO1133-1:2011 unter Verwendung von 2,16 kg bei 230 °C bestimmt wird, und
• ein Verhältnis von Methylensequenz n>5 zur Menge der aus Ethylen abgeleiteten Einheiten auf Basis des Ethylen-Propylen-Copolymers von weniger als 0,32, vorzugsweise weniger als 0,30.

**2.** Polypropylenzusammensetzung, umfassend ein heterophasisches Propylen-Copolymer, wobei das heterophasische Propylen-Copolymer aus Folgendem besteht:

• einer Propylenhomopolymermatrix in einer Menge von 71 bis 92 Gew.-%, vorzugsweise von 78 bis 89 Gew.-%, bevorzugter von 84 bis 89 Gew.-%, bezogen auf das heterophasische Propylen-Copolymer,
• einem Ethylen-Propylen-Copolymer in einer Menge von 8 bis 29 Gew.-%, vorzugsweise von 10 bis 29, bevorzugter von 11 bis 29 Gew.-%, noch bevorzugter von 11 bis 22 Gew.-%, noch bevorzugter von 11 bis 16 Gew.-%, bezogen auf das heterophasische Propylen-Copolymer und
• wobei die Menge der aus Ethylen abgeleiteten Einheiten auf Basis des Ethylen-Propylen-Copolymers zwischen 42 und 60 Gew.-%, bevorzugter 42 und 55 Gew.-%, bevorzugter 45 und 51 Gew.-% liegt und

wobei die Polypropylenzusammensetzung Folgendes aufweist:

- eine Schmelze-Massefließrate (MFR) im Bereich von 0,50 bis 120 dg/min, wobei die Schmelze-Massefließrate nach ISO1133-1:2011 unter Verwendung von 2,16 kg bei 230 °C bestimmt wird, und
- eine Methylensequenz n>5 von unter 16.

**3.** Polypropylenzusammensetzung nach einem der vorstehenden Ansprüche, wobei das heterophasische Propylen-Copolymer in der Polypropylenzusammensetzung durch Visbreaking eines intermediären heterophasischen Propylen-Copolymers mit einer anfänglichen Schmelze-Massefließrate (MFRinitial) von 0,5 bis 50, vorzugsweise 0,5 bis 40, bevorzugter 0,5 bis 25 dg/min hergestellt wird, bestimmt nach ISO1133-1:2011 unter Verwendung von 2,16 kg bei 230 °C, indem das intermediäre heterophasische Propylen-Copolymer in einem Schmelzmischprozess mit einem Peroxid in einer solchen Menge in Kontakt gebracht wird, dass eine Zusammensetzung erhalten wird, die ein heterophasisches Propylen-Copolymer mit der gewünschten endgültigen Schmelze-Massefließrate (MFRfinal) von 0,5 bis 120, vorzugsweise 0,5 bis 80, bevorzugter 0,5 bis 45d g/min umfasst, bestimmt nach ISO1133-1:2011 unter Verwendung von 2,16 kg bei 230 °C.

**4.** Polypropylenzusammensetzung nach einem der vorstehenden Ansprüche, wobei die Polypropylenzusammensetzung einen in kaltem Xylol löslichen Gehalt (CXS) im Bereich von 8 bis 29 Gew.-%, vorzugsweise von 10 bis 28, bevorzugter von 11 bis 22 Gew.-%, noch bevorzugter von 11 bis 16 Gew.-% aufweist, wobei der in kaltem Xylol lösliche Gehalt (CXS) gemäß dem CRYSTEX-Verfahren für heterophasisches Propylen-Copolymer gemäß der Beschreibung gemessen wird.

**5.** Polypropylenzusammensetzung nach einem der vorstehenden Ansprüche, wobei die Propylenhomopolymermatrix einen in kaltem Xylol löslichen Gehalt (CXS) im Bereich von 1 bis 4 Gew.-%, vorzugsweise von 1 bis 3 Gew.-% aufweist, wobei der in kaltem Xylol lösliche Gehalt (CXS) gemäß dem CRYSTEX-Verfahren für Propylenhomopolymer gemäß der Beschreibung gemessen wird.

**6.** Polypropylenzusammensetzung nach einem der vorstehenden Ansprüche, wobei die Propylenhomopolymermatrix vor jedem Visbreaking-Schritt Folgendes aufweist:

a. eine Pentadenisotaktizität von mindestens 96 Gew.-%, vorzugsweise mindestens 97 Gew.-%, wobei die Pentadenisotaktizität mittels $^{13}C$-NMR bestimmt wird, und/oder
b. eine Schmelze-Massefließrate ($MFR_{Hopol}$), bestimmt nach 1801133-1:2011 unter Verwendung von 2,16 kg bei 230 °C, im Bereich von 0,5 bis 100, vorzugsweise 0,5 bis 95, bevorzugter 0,5 bis 85, noch bevorzugter 2 bis 40 dg/min.

**7.** Polypropylenzusammensetzung nach einem der vorstehenden Ansprüche, wobei das heterophasische Propylen-Copolymer eine Methylensequenz n>5 von unter 16 aufweist.

**8.** Polypropylenzusammensetzung nach einem der vorstehenden Ansprüche, wobei die Menge an heterophasischem Propylen-Copolymer bezogen auf die Polypropylenzusammensetzung mindestens 95 Gew.-% beträgt und/oder die Polypropylenzusammensetzung weiter Additive umfasst, beispielsweise in einer Menge von 0,10 bis 2,0 Gew.-% bezogen auf die Polypropylenzusammensetzung.

**9.** Polypropylenzusammensetzung nach einem der vorstehenden Ansprüche, wobei das heterophasische Propylen-Copolymer in einem sequenziellen Mehrreaktor-Polymerisationsprozess in Gegenwart eines Katalysators hergestellt wird, umfassend:

a. einen Ziegler-Natta-Prokatalysator, umfassend Verbindungen eines Übergangsmetalls der Gruppen 4 bis 6 laut IUPAC, eine Verbindung eines Metalls der Gruppe 2 und einen internen Donator, wobei der interne Donator vorzugsweise eine phthalsäurefreie Verbindung, bevorzugter ein phthalsäurefreier Ester ist, und wobei der interne Donator noch bevorzugter aus der Gruppe von beispielsweise 3,3-Bis(methoxymethyl)-2,6-dimethylheptan, 9,9-Bis(methoxymethyl)fluoren, optional substituierten Malonaten, Maleaten, Succinaten, Glutaraten, Benzoesäureestern, Cyclohexen-1,2-dicarboxylaten, Benzoaten, Citraconaten, Aminobenzoaten, Silylestern und Derivaten und/oder Mischungen davon ausgewählt ist;
b. einen Co-Katalysator (Co) und
c. optional einen externen Donator.

**10.** Polypropylenzusammensetzung nach Anspruch 7, wobei der Ziegler-Natta-Prokatalysator nach folgendem Schritt hergestellt wird:

a. Inkontaktbringen einer Verbindung $R^4{}_zMgX^4{}_{2-z}$ mit einer alkoxy- oder aryloxyhaltigen Silanverbindung, um ein erstes Zwischenreaktionsprodukt zu erhalten, das ein Feststoff $Mg(OR^a)_xX^1{}_{2-x}$ ist, wobei: $R^a$ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei $R^4$ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist, $R^4$ vorzugsweise Butyl ist; wobei $X^4$ und $X^1$ jeweils unabhängig aus der Gruppe bestehend aus Fluorid (F-), Chlorid (Cl-), Bromid (Br-) oder Iodid (I-) ausgewählt sind, vorzugsweise Chlorid sind; z im Bereich größer als 0 und kleiner als 2 liegt, wobei $0 < z < 2$, wobei x eine ganze Zahl zwischen 0 und 2 ist;
b. optionales Inkontaktbringen des in Schritt i) erhaltenen Feststoffs $Mg(OR^a)_xX^1{}_{2-x}$ mit mindestens einer aktivierenden Verbindung, ausgewählt aus der Gruppe der aktivierenden Elektronendonatoren und Metallalkoxidverbindungen der Formel $M^1(OR^b)_{v-w}(OR^3)_w$ oder $M^2(OR^b)_{v-w}(R^3)_w$, um ein zweites Zwischenprodukt zu erhalten; wobei: $M^1$ ein Metall ist, ausgewählt aus der Gruppe bestehend aus Ti, Zr, Hf, Al oder Si; v die Wertigkeit von $M^1$ ist; $M^2$ ein Metall ist, und zwar Si; v die Wertigkeit von $M^2$ ist; $R^b$ und $R^3$ jeweils eine lineare, verzweigte oder cyclische Kohlenwasserstoffgruppe sind, die unabhängig aus Alkyl-, Alkenyl-, Aryl-, Aralkyl-, Alkoxycarbonyl- oder Alkylarylgruppen sowie einer oder mehreren Kombinationen davon ausgewählt sind; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei w kleiner als v ist, wobei v vorzugsweise 3 oder 4 beträgt;
c. Inkontaktbringen des ersten oder zweiten Zwischenreaktionsprodukts, das in Schritt a) bzw. b) erhalten wurde, mit einer halogenhaltigen Ti-Verbindung und einem internen Elektronendonator.

**11.** Polypropylenzusammensetzung nach Anspruch 7 oder 8, wobei der interne Donator 3,3-Bis(methoxymethyl)-2,6-dimethylheptan ist und/oder wobei die aktivierende Verbindung N-N-Dimethylbenzamid ist und/oder wobei der Co-Katalysator vorzugsweise ausgewählt ist aus der Gruppe bestehend aus Trimethylaluminium, Triethylaluminium, Triisobutylaluminium, Trihexylaluminium, Diisobutylaluminiumhydrid, Trioctylaluminium, Dihexylaluminiumhydrid und Mischungen davon.

**12.** Polypropylenzusammensetzung nach Anspruch 7 bis 9, wobei der externe Donator ausgewählt ist aus der Liste, die Organosiliciumverbindungen, Silane, Alkoxysilane, Alkylsilane, Alkylalkoxysilane und aliphatische/aromatische Ester umfasst, beispielsweise Dicyclopentyldimethoxysilan, Di-tert-butyldimethoxysilan, Methylcyclohexyldimethoxysilan, Ethylcyclohexyldimethoxysilan, Diphenyldimethoxysilan, Diisopropyldimethoxysilan, Di-n-propyldimethoxysilan, Diisobutyldimethoxysilan, Di-n-butyldimethoxysilan, Cyclopentyltrimethoxysilan, Isopropyltrimethoxysilan, n-Propyltrimethoxysilan, n-Propyltriethoxysilan, Ethyltriethoxysilan, Tetramethoxysilan, Tetraethoxysilan, Cyclopentylpyrrolidinodimethoxysilan, Bis(pyrrolidino)-dimethoxysilan und Mischungen davon, vorzugsweise Di(isopropyl) dimethoxysilan (DiPDMS).

**13.** Artikel, umfassend die Polypropylenzusammensetzung nach einem der vorstehenden Ansprüche,

wobei die Menge der Polypropylenzusammensetzung bezogen auf den Artikel mindestens 95 Gew.-% beträgt und/oder
wobei der Artikel durch Spritzgießen hergestellt ist und/oder
wobei es sich bei dem Artikel um einen Haushaltsartikel wie ein Staubsaugergehäuse, Haushaltschemikalien und Farben oder um einen Verpackungsartikel wie Behälter, Kisten, Kartons, Batteriegehäuse, Eimer, Blumentöpfe, Lebensmittelbehälter/-verpackung, Eiscremebehälter, dünnwandige Verpackungen, Kappen und Verschlüsse, Verpackungen im Gesundheitsbereich oder einen Artikel im Gesundheitsbereich wie einen Artikel für die Arzneimittelverabreichung, Laborbedarf, eine medizinische Vorrichtung, einen Artikel für medizinische Diagnosen oder einen Automobilinnenausstattungsartikel wie Instrumententafelträger, Türverkleidungen, Armaturenbretter, Armaturenbrettträger, Türverkleidungen, Türbeschläge, Armlehnen, Säulenverkleidungen, Sitzverkleidungen, Kofferraumverkleidungen, Innenverkleidungen und Anwendungen in der Heizungs-, Lüftungs- und Klimatechnik (HLK) handelt.

**14.** Verwendung der Polypropylenzusammensetzung nach einem der Ansprüche 1-10 zur Herstellung eines Artikels,

wobei die Menge der Polypropylenzusammensetzung bezogen auf den Artikel mindestens 95 Gew.-% beträgt und/oder

wobei der Artikel durch Spritzgießen hergestellt ist und/oder wobei es sich bei dem Artikel um einen Haushaltsartikel wie ein Staubsaugergehäuse, Haushaltschemikalien und Farben oder um einen Verpackungsartikel wie Behälter, Kisten, Kartons, Batteriegehäuse, Eimer, Blumentöpfe, Lebensmittelbehälter/-verpackung, Eiscremebehälter, dünnwandige Verpackungen, Kappen und Verschlüsse, Verpackungen im Gesundheitsbereich oder einen Artikel im Gesundheitsbereich wie einen Artikel für die Arzneimittelverabreichung, Laborbedarf, eine medizinische Vorrichtung, einen Artikel für medizinische Diagnosen oder einen Automobilinnenausstattungsartikel wie Instrumententafelträger, Türverkleidungen, Armaturenbretter, Armaturenbrettträger, Türverkleidungen, Türbeschläge, Armlehnen, Säulenverkleidungen, Sitzverkleidungen, Kofferraumverkleidungen, Innenverkleidungen und Anwendungen in der Heizungs-, Lüftungs- und Klimatechnik (HLK) handelt.

**15.** Prozess zur Herstellung eines Artikels, der die folgenden Schritte umfasst:

a. Bereitstellen der Polypropylenzusammensetzung nach einem der Ansprüche 1-10 und
b. Umwandeln der Polypropylenzusammensetzung in einen Artikel, beispielsweise durch ein Extrusions- oder Spritzgießprozess.

**16.** Prozess zur Herstellung der Polypropylenzusammensetzung nach einem der Ansprüche 1 bis 10, umfassend:

i) Polymerisieren von Propylen in Gegenwart eines Katalysators, um die Matrix auf Basis von Propylenhomopolymer zu erhalten, und
ii) anschließendes Polymerisieren von Ethylen mit Propylen in Gegenwart eines Katalysators in der Propylenhomopolymermatrix, um das heterophasische Propylencopolymer zu erhalten,

wobei die Schritte i) und ii) in verschiedenen Reaktoren durchgeführt werden, wobei die in Schritt i) und für den zweiten Schritt ii) verwendeten Katalysatoren Folgendes umfassen:

a. einen Ziegler-Natta-Prokatalysator, umfassend Verbindungen eines Übergangsmetalls der Gruppen 4 bis 6 laut IUPAC, eine Verbindung eines Metalls der Gruppe 2 und einen internen Donator, wobei der interne Donator vorzugsweise eine phthalsäurefreie Verbindung, bevorzugter ein phthalsäurefreier Ester ist, und wobei der interne Donator noch bevorzugter aus der Gruppe von beispielsweise 3,3-Bis(methoxymethyl)-2,6-dimethylheptan, 9,9-Bis(methoxymethyl)fluoren, optional substituierten Malonaten, Maleaten, Succinaten, Glutaraten, Benzoesäureestern, Cyclohexen-1,2-dicarboxylaten, Benzoaten, Citraconaten, Aminobenzoaten, Silylestern und Derivaten und/oder Mischungen davon ausgewählt ist;
b. einen Co-Katalysator (Co) und
c. optional einen externen Donator.

**17.** Prozess nach Anspruch 6, wobei der Ziegler-Natta-Prokatalysator nach den folgenden Schritten hergestellt wird:

a. Inkontaktbringen einer Verbindung $R^4{}_zMgX^4{}_{2-z}$ mit einer alkoxy- oder aryloxyhaltigen Silanverbindung, um ein erstes Zwischenreaktionsprodukt zu erhalten, das ein Feststoff $Mg(OR^a)_xX^1{}_{2-x}$ ist, wobei: $R^a$ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei $R^4$ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist, $R^4$ vorzugsweise Butyl ist; wobei $X^4$ und $X^1$ jeweils unabhängig aus der Gruppe bestehend aus Fluorid (F-), Chlorid (Cl-), Bromid (Br-) oder Iodid (I-) ausgewählt sind, vorzugsweise Chlorid sind; z im Bereich größer als 0 und kleiner als 2 liegt, wobei $0 < z < 2$ ist;
b. optionales Inkontaktbringen des in Schritt i) erhaltenen Feststoffs $Mg(OR^a)_xX^1{}_{2-x}$ mit mindestens einer aktivierenden Verbindung, ausgewählt aus der Gruppe der aktivierenden Elektronendonatoren und Metallalkoxidverbindungen der Formel $M^1(OR^b)_{v-w}(OR^3)_w$ oder $M^2(OR^b)_{v-w}(R^3)_w$, um ein zweites Zwischenprodukt zu erhalten; wobei: $M^1$ ein Metall ist, ausgewählt aus der Gruppe bestehend aus Ti, Zr, Hf, Al oder Si; v die Wertigkeit

von $M^1$ ist; $M^2$ ein Metall ist, und zwar Si; v die Wertigkeit von $M^2$ ist; $R^b$ und $R^3$ jeweils eine lineare, verzweigte oder cyclische Kohlenwasserstoffgruppe sind, die unabhängig aus Alkyl-, Alkenyl-, Aryl-, Aralkyl-, Alkoxycarbonyl- oder Alkylarylgruppen sowie einer oder mehreren Kombinationen davon ausgewählt sind; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei w kleiner als v ist, wobei v vorzugsweise 3 oder 4 beträgt;

c. Inkontaktbringen des ersten oder zweiten Zwischenreaktionsprodukts, das in Schritt a) bzw. b) erhalten wurde, mit einer halogenhaltigen Ti-Verbindung und einem internen Elektronendonator.

## Revendications

**1.** Composition de polypropylène comprenant un copolymère de propylène hétérophasique, dans laquelle le copolymère de propylène hétérophasique consiste en :

- une matrice d'homopolymère de propylène en une quantité de 71 à 92 % en poids, préférentiellement de 78 à 89 % en poids, plus préférentiellement de 84 à 89 % en poids sur la base du copolymère de propylène hétérophasique,
- un copolymère d'éthylène-propylène en une quantité de 8 à 29 % en poids, préférentiellement de 10 à 29 % en poids, plus préférentiellement de 11 à 29 % en poids, encore plus préférentiellement de 11 à 22 % en poids, et encore plus préférentiellement de 11 à 16 % en poids sur la base du copolymère de propylène hétérophasique, et
- dans laquelle la quantité d'unités dérivées de l'éthylène, sur la base du copolymère d'éthylène-propylène, est comprise entre 42 et 60 % en poids, plus préférentiellement entre 42 et 55 % en poids, plus préférentiellement entre 45 et 51 % en poids, et

dans laquelle la composition de polypropylène présente

- un indice de fluidité à chaud (MFR) dans la plage allant de 0,50 à 120 dg/min, dans lequel l'indice de fluidité à chaud est déterminé à l'aide de ISO1133-1:2011 en utilisant 2,16 kg à 230 °C, et
- un rapport de séquence méthylène n>5 sur la quantité d'unités dérivées de l'éthylène sur la base du copolymère d'éthylène-propylène inférieur à 0,32, préférentiellement inférieur à 0,30.

**2.** Composition de polypropylène comprenant un copolymère de propylène hétérophasique, dans laquelle le copolymère de propylène hétérophasique consiste en :

- une matrice d'homopolymère de propylène en une quantité de 71 à 92 % en poids, préférentiellement de 78 à 89 % en poids, plus préférentiellement de 84 à 89 % en poids sur la base du copolymère de propylène hétérophasique,
- un copolymère d'éthylène-propylène en une quantité de 8 à 29 % en poids, préférentiellement de 10 à 29 % en poids, plus préférentiellement de 11 à 29 % en poids, encore plus préférentiellement de 11 à 22 % en poids, et encore plus préférentiellement de 11 à 16 % en poids sur la base du copolymère de propylène hétérophasique, et
- dans laquelle la quantité d'unités dérivées de l'éthylène, sur la base du copolymère d'éthylène-propylène, est comprise entre 42 et 60 % en poids, plus préférentiellement entre 42 et 55 % en poids, plus préférentiellement entre 45 et 51 % en poids, et

dans laquelle la composition de polypropylène présente

- un indice de fluidité à chaud (MFR) dans la plage allant de 0,50 à 120 dg/min, dans lequel l'indice de fluidité à chaud est déterminé à l'aide de ISO1133-1:2011 en utilisant 2,16 kg à 230 °C, et
- une séquence de méthylène n>5 de moins de 16.

**3.** Composition de polypropylène selon l'une quelconque des revendications précédentes, dans laquelle le copolymère de propylène hétérophasique au sein de la composition de polypropylène est préparé par viscoréduction d'un copolymère de propylène hétérophasique intermédiaire présentant un indice de fluidité à chaud initial (MFRinitial) compris entre 0,5 et 50, préférentiellement entre 0,5 et 40, plus préférentiellement entre 0,5 et 25 dg/min tel que déterminé selon ISO1133-1:2011 en utilisant 2,16 kg à 230 °C en mettant en contact ledit copolymère de propylène hétérophasique intermédiaire dans un processus de mélange à l'état fondu avec un peroxyde en quantité telle qu'une composition comprenant un copolymère de propylène hétérophasique présentant l'indice de fluidité à chaud final

(MFRfinal) souhaité de 0,5 à 120, préférentiellement de 0,5 à 80, et plus préférentiellement de 0,5 à 45 dg/min tel que déterminé selon ISO1133-1:2011 en utilisant 2,16 kg à 230 °C est obtenue.

**4.** Composition de polypropylène selon l'une quelconque des revendications précédentes, dans laquelle la composition de polypropylène présente une teneur en xylène froid soluble (CXS) dans la plage allant de 8 à 29 % en poids, préférentiellement de 10 à 28, plus préférentiellement de 11 à 22 % en poids, encore plus préférentiellement de 11 à 16 % en poids, dans laquelle la teneur en xylène froid soluble (CXS) est mesurée conformément au procédé CRYSTEX pour le copolymère de propylène hétérophasique selon la description.

**5.** Composition de polypropylène selon l'une quelconque des revendications précédentes, dans laquelle la matrice d'homopolymère de propylène présente une teneur en xylène froid soluble (CXS) dans la plage allant de 1 à 4 % en poids, préférentiellement de 1 à 3 % en poids, dans laquelle la teneur en xylène froid soluble (CXS) est mesurée conformément au procédé CRYSTEX pour l'homopolymère de propylène selon la description.

**6.** Composition de polypropylène selon l'une quelconque des revendications précédentes, dans laquelle la matrice d'homopolymère de propylène avant toute étape de viscoréduction présente

a. une isotacticité pentadique d'au moins 96 % en poids, préférentiellement d'au moins 97 % en poids, dans laquelle l'isotacticité pentadique est déterminée par RMN $^{13}C$ et/ou
b. un indice de fluidité à chaud ($MFR_{Hopol}$) déterminé selon 1801133-1:2011 en utilisant 2,16 kg à 230 °C dans la plage allant de 0,5 à 100, préférentiellement de 0,5 à 95, plus préférentiellement de 0,5 à 85, encore plus préférentiellement de 2 à 40 dg/min.

**7.** Composition de polypropylène selon l'une quelconque des revendications précédentes, dans laquelle le copolymère de propylène hétérophasique présente une séquence de méthylène n>5 de moins de 16.

**8.** Composition de polypropylène selon l'une quelconque des revendications précédentes, dans laquelle la quantité de copolymère de propylène hétérophasique est d'au moins 95 % en poids sur la base de la composition de polypropylène et/ou la composition de polypropylène comprend en outre des additifs, par exemple en une quantité de 0,10 à 2,0 % en poids sur la base de la composition de polypropylène.

**9.** Composition de polypropylène selon l'une quelconque des revendications précédentes, dans laquelle le copolymère de propylène hétérophasique est produit par un processus de polymérisation séquentielle multiréacteur en présence d'un catalyseur comprenant

a. un procatalyseur Ziegler-Natta comprenant des composés d'un métal de transition des groupes 4 à 6 de l'IUPAC, un composé d'un métal du groupe 2 et un donneur interne, dans laquelle ledit donneur interne est préférentiellement un composé non phtalique, plus préférentiellement un ester d'acide non phtalique, encore plus préférentiellement dans laquelle ledit donneur interne est choisi parmi, par exemple, le 3,3-bis(méthoxyméthyl)-2,6-diméthylheptane, le 9,9-bis(méthoxyméthyl)fluorène, des malonates, maléates, succinates, glutarates, esters d'acide benzoïque, cyclohexène-1,2-dicarboxylates, benzoates, citraconates, aminobenzoates, esters silylés facultativement substitués et des dérivés et/ou mélanges de ceux-ci ;
b. un co-catalyseur (Co), et
c. facultativement un donneur externe.

**10.** Composition de polypropylène selon la revendication 7, dans laquelle le procatalyseur Ziegler-Natta est préparé selon les étapes suivantes :

a. mise en contact d'un composé $R^4_zMgX^4_{2-z}$ avec un composé de silane contenant un groupe alcoxy ou aryloxy pour donner un premier produit de réaction intermédiaire, étant un solide $Mg(OR^a)_xX^1_{2-x}$, dans lequel : $R^a$ est un groupe hydrocarbyle linéaire, ramifié ou cyclique choisi indépendamment parmi des groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes et présente préférentiellement de 1 à 20 atomes de carbone ; dans lequel $R^4$ est un groupe hydrocarbyle linéaire, ramifié ou cyclique choisi indépendamment parmi des groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes et présente préférentiellement de 1 à 20 atomes de carbone, préférentiellement $R^4$ est un groupe butyle ; dans lequel $X^4$ et $X^1$ sont chacun indépen-

damment choisis parmi le fluorure (F-), le chlorure (Cl-), le bromure (Br-) ou l'iodure (I-), préférentiellement le chlorure ; z est dans une plage allant de plus de 0 à moins de 2, étant 0 < z < 2, x est un entier compris entre 0 et 2 ;
b. mise en contact facultative du solide $Mg(OR^a)_xX^1{}_{2-x}$ obtenu à l'étape i) avec au moins un composé activateur choisi dans le groupe formé par des donneurs d'électrons activateurs et des composés alcoxydes métalliques de formule $M^1(OR^b)_{v-w}(OR^3)_w$ ou $M^2(OR^b)_{v-w}(R^3)_w$, pour obtenir un second produit intermédiaire ; dans lequel : $M^1$ est un métal choisi parmi Ti, Zr, Hf, Al ou Si ; v est la valence de $M^1$; $M^2$ désigne un métal, le silicium (Si) ; v représente la valence de $M^2$; $R^b$ et $R^3$ représentent chacun un groupe hydrocarbyle linéaire, ramifié ou cyclique, choisi indépendamment parmi les groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes, et présente préférentiellement de 1 à 20 atomes de carbone ; dans lequel w est inférieur à v, v étant préférentiellement égal à 3 ou 4 ;
c. mise en contact du premier ou du second produit de réaction intermédiaire, obtenu respectivement à l'étape a) ou b), avec un composé de Ti contenant un halogène et un donneur d'électrons interne.

**11.** Composition de polypropylène selon la revendication 7 ou 8, dans laquelle le donneur interne est le 3,3-bis(méthoxyméthyl)-2,6-diméthylheptane, et/ou dans laquelle le composé activateur est le N,N-diméthylbenzamide et/ou dans laquelle le co-catalyseur est préférentiellement choisi dans le groupe consistant en du triméthylaluminium, du triéthylaluminium, du triisobutylaluminium, du trihexylaluminium, de l'hydrure de diisobutylaluminium, du trioctylaluminium, de l'hydrure de dihexylaluminium et des mélanges de ceux-ci.

**12.** Composition de polypropylène selon les revendications 7 à 9, dans laquelle le donneur externe est choisi parmi la liste comprenant des composés organosiliciés, des silanes, des alcoxysilanes, des alkylsilanes, des alkylalcoxysilanes et des esters aliphatiques/aromatiques, par exemple dicyclopentyldiméthoxysilane, di-tert-butyldiméthoxysilane, méthylcyclohexyldiméthoxysilane, éthylcyclohexyldiméthoxysilane, diphényldiméthoxysilane, diisopropyldiméthoxysilane, di-n-propyldiméthoxysilane, diisobutyldiméthoxysilane, di-n-butyldiméthoxysilane, cyclopentyltriméthoxysilane, isopropyltriméthoxysilane, n-propyltriméthoxysilane, n-propyltriéthoxysilane, éthyltriéthoxysilane, tétraméthoxysilane, tétraéthoxysilane, cyclopentylpyrrolidinodiméthoxysilane, bis(pyrrolidino)diméthoxysilane, et des mélanges de ceux-ci, préférentiellement le di(isopropyl)diméthoxysilane (DiPDMS).

**13.** Article comprenant la composition de polypropylène selon l'une quelconque des revendications précédentes,

dans lequel la quantité de la composition de polypropylène est d'au moins 95 % en poids sur la base de l'article et/ou
dans lequel l'article est préparé par moulage par injection, et/ou,
dans lequel l'article est un article ménager tel qu'un boîtier d'aspirateur, des produits chimiques ménagers et des peintures, ou un article d'emballage tel que des conteneurs, des caisses, des boîtes, des boîtiers de batterie, des seaux, des pots de fleurs, des conteneurs/emballages de produits alimentaires, des contenants de crème glacée, des emballages à parois minces, des bouchons et fermetures, des emballages de soins de santé ou des articles de soins de santé tels que des articles d'administration de médicaments, des articles de laboratoire, des dispositifs médicaux, des articles de diagnostic médical ou des articles d'intérieur automobile tels que des supports de tableau de bord, des panneaux de porte, des tableaux de bord, des supports de tableau de bord, des revêtements de porte, des accessoires de porte, des accoudoirs, des revêtements de montant, des revêtements de siège, des revêtements de coffre, des garnitures intérieures et des applications dans les systèmes de chauffage, ventilation et climatisation (CVC).

**14.** Utilisation de la composition de polypropylène selon l'une quelconque des revendications 1-10 pour la préparation d'un article,

dans lequel la quantité de la composition de polypropylène est d'au moins 95 % en poids sur la base de l'article et/ou
dans lequel l'article est préparé par moulage par injection, et/ou,

dans lequel l'article est un article ménager tel qu'un boîtier d'aspirateur, des produits chimiques ménagers et des peintures, ou un article d'emballage tel que des conteneurs, des caisses, des boîtes, des boîtiers de batterie, des seaux, des pots de fleurs, des conteneurs/emballages de produits alimentaires, des contenants de crème glacée, des emballages à parois minces, des bouchons et fermetures, des emballages de soins de santé ou des articles de soins de santé tels que des articles d'administration de médicaments, des articles de laboratoire, des dispositifs médicaux, des articles de diagnostic médical ou des articles d'intérieur automobile tels que des supports de tableau de bord, des

panneaux de porte, des tableaux de bord, des supports de tableau de bord, des revêtements de porte, des accessoires de porte, des accoudoirs, des revêtements de montant, des revêtements de siège, des revêtements de coffre, des garnitures intérieures et des applications dans les systèmes de chauffage, ventilation et climatisation (CVC).

**15.** Procédé de préparation d'un article, comprenant les étapes de :

a. fourniture de la composition de polypropylène selon l'une quelconque des revendications 1-10, et
b. transformation de la composition de polypropylène en un article, par exemple en utilisant un processus d'extrusion ou de moulage par injection.

**16.** Procédé de préparation de la composition de polypropylène selon l'une quelconque des revendications 1 à 10, comprenant

i) la polymérisation du propylène en présence d'un catalyseur pour obtenir la matrice à base d'homopolymère de propylène, et
ii) la polymérisation ultérieure de l'éthylène avec le propylène en présence d'un catalyseur dans la matrice d'homopolymère de propylène pour obtenir le copolymère de propylène hétérophasique,

dans lequel les étapes i) et ii) sont réalisées dans des réacteurs différents,
dans lequel les catalyseurs utilisés à l'étape i) et pour la seconde étape ii) comprennent

a. un procatalyseur Ziegler-Natta comprenant des composés d'un métal de transition des groupes 4 à 6 de l'IUPAC, un composé d'un métal du groupe 2 et un donneur interne, dans laquelle ledit donneur interne est préférentiellement un composé non phtalique, plus préférentiellement un ester d'acide non phtalique, encore plus préférentiellement dans laquelle ledit donneur interne est choisi parmi, par exemple, le 3,3-bis(méthoxyméthyl)-2,6-diméthylheptane, le 9,9-bis(méthoxyméthyl)fluorène, des malonates, maléates, succinates, glutarates, esters d'acide benzoïque, cyclohexène-1,2-dicarboxylates, benzoates, citraconates, aminobenzoates, esters silylés facultativement substitués et des dérivés et/ou mélanges de ceux-ci ;
b. un co-catalyseur (Co), et
c. facultativement un donneur externe.

**17.** Processus selon la revendication 6, dans lequel le procatalyseur Ziegler-Natta est préparé selon les étapes suivantes :

a. mise en contact d'un composé $R^4zMgX^4_{2-z}$ avec un composé de silane contenant un groupe alcoxy ou aryloxy pour donner un premier produit de réaction intermédiaire, étant un solide $Mg(OR^a)_xX^1_{2-x}$, dans lequel : $R^a$ est un groupe hydrocarbyle linéaire, ramifié ou cyclique choisi indépendamment parmi des groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes et présente préférentiellement de 1 à 20 atomes de carbone ; dans lequel $R^4$ est un groupe hydrocarbyle linéaire, ramifié ou cyclique choisi indépendamment parmi des groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes et présente préférentiellement de 1 à 20 atomes de carbone, préférentiellement $R^4$ est un groupe butyle ; dans lequel $X^4$ et $X^1$ sont chacun indépendamment choisis parmi le fluorure (F-), le chlorure (Cl-), le bromure (Br-) ou l'iodure (I-), préférentiellement le chlorure ; z est dans une plage allant de plus de 0 à moins de 2, étant $0 < z < 2$ ;
b. mise en contact facultative du solide $Mg(OR^a)_xX^1_{2-x}$ obtenu à l'étape i) avec au moins un composé activateur choisi dans le groupe formé par des donneurs d'électrons activateurs et des composés alcoxydes métalliques de formule $M^1(OR^b)_{v-w}(OR^3)_w$ ou $M^2(OR^b)_{v-w}(R^3)_w$, pour obtenir un second produit intermédiaire ; dans lequel : $M^1$ est un métal choisi parmi Ti, Zr, Hf, Al ou Si ; v est la valence de $M^1$; $M^2$ désigne un métal, le silicium (Si) ; v représente la valence de $M^2$ ; $R^b$ et $R^3$ représentent chacun un groupe hydrocarbyle linéaire, ramifié ou cyclique, choisi indépendamment parmi les groupes alkyle, alcényle, aryle, aralkyle, alcoxycarbonyle ou alkylaryle, et une ou plusieurs combinaisons de ceux-ci ; dans lequel ledit groupe hydrocarbyle peut être substitué ou non substitué, peut contenir un ou plusieurs hétéroatomes, et présente préférentiellement de 1 à 20 atomes de carbone ; dans lequel w est inférieur à v, v étant préférentiellement égal à 3 ou 4 ;
c. mise en contact du premier ou du second produit de réaction intermédiaire, obtenu respectivement à l'étape a) ou b), avec un composé de Ti contenant un halogène et un donneur d'électrons interne.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 1996019533 A
- US 4282076 A
- EP 0063654 A
- WO 06010414 A
- US 4399054 A
- US 4472524 A
- EP 1273595 A
- EP 0019330 A
- US 5093415 A
- US 6825146 B
- US 4771024 A
- WO 03068828 A
- US 4866022 A
- WO 9632426 A
- WO 2007134851 A1
- WO 2015091983 A
- WO 2021063930 A
- WO 2021063930 A1
- WO 2019179959 A

### Non-patent literature cited in the description

- Polypropylene and other Polyolefins. **SER VAN DER VEN**. Studies in Polymer Science. Elsevier, 1990, vol. 7
- Handbook of Chemistry and Physics. CRC Press, 1989
- **J.C. RANDALL**. Polymer sequence determination Carbon 13 NMR Method. Academic Press, 1977
- Methylene Sequence Distribution and number average sequences lengths in ethylene-propylene copolymer. *Macromolecules*, 1978, vol. 11 (1), 33
- **ZHOU Z. et al.** *J. Mag. Reson*, 2007, vol. 187, 225
- **DEL HIERRO, P** ; **ORTIN, A** ; **MONRABAL, B**. *Soluble Fraction Analysis in polypropylene, The Column*, February 2014, 18-23
- **CARVILL et al.** *Macromolecules*, 1998, vol. 31, 3783-3789